# EUROPEAN PATENT APPLICATION

(11) **EP 4 800 575 A1**
(43) Date of publication of application: **02.09.2026**
(21) Application number: 26161780.7
(22) Date of filing: 02.03.2026
(51) Int. Cl.: G06F 16/9032

(54) **SYSTEMS AND METHODS FOR CONTEXTUAL RECALL FOR INCREASING RELEVANCY AND REDUCING HALLUCINATIONS IN CHAT-BASED INTERACTIONS**

(30) Priority: 28.02.2025 US 202563764673 P; 27.02.2026 US 202619552459
(71) Applicant: JPMorgan Chase Bank, N.A., New York, NY 10179 (US)
(72) Inventor: KOMAROVSKY, Stanislav, New York, 10179 (US); MUTHUSAMY, Thenmozhi, New York, 10179 (US)
(74) Representative: Patentanwälte Olbricht Buchhold Keulertz

(57) **Abstract**

In some embodiments, the techniques described herein relate to a method including: receiving a user input message within a conversational session; indexing the message with metadata fields including a message identifier, a content, a timestamp, a user identification, a session identification, at least two keywords, and at least two entities; expanding the user input using a lexical database to include synonyms, keywords, and entities for broader contextual recall; applying recentness filtering to prioritize recall of recent interactions, emulating human short-term memory; ranking potential responses using a context-sensitive scoring mechanism based on recentness, content relevance, keywords, and entities; storing and indexing a plurality of features ranked based on frequency; searching a database to manage contextual memory, leveraging keywords and entities to retrieve the ranked features from the indexed conversational history; generating a dynamic prompt template based on user input, session history, and contextual memory to produce the response.

## Description

### RELATED APPLICATIONS

This application claims priority to, and the benefit of, U.S. Provisional Patent Application Ser. No. 63/764,673, filed February 28, 2025, the disclosure of which is hereby incorporated, by reference in its entirety.

### BACKGROUND

### 1. Field of The Invention

Embodiments generally relate to systems and methods for contextual recall for increasing relevancy and reducing hallucinations in chat-based interactions.

### 2. Description of the Related Art

Large language models are inherently stateless, processing each query independently of previous interactions. This lack of state awareness means the model does not naturally recall past interactions, which is essential for maintaining context in ongoing conversations. The issues with improving these systems including implementing conversational memory requires effectively managing the conversational history to provide context for the user input. This involves capturing and utilizing past interactions while ensuring that only relevant information is retained. Conventional systems do not accomplish capturing and utilizing past interactions and thus are subject to hallucinations and lack of relevance. Conventional systems determining incorrect information from past interactions can be more detrimental than missing information. Further, managing capacity efficiently is crucial, but is not accomplished in current systems. In other words, methods that indiscriminately store all interactions can quickly approach the capacity, particularly with large prompts or many entries.

Different approaches to conversational memory, such as storing raw interactions or summarizing past exchanges, offer various trade-offs in terms of token usage and context retention. Selecting and configuring the appropriate memory strategy is complex and requires careful consideration. Enhancing conversational memory with external knowledge sources, such as databases or structured data, adds another layer of complexity. An improved artificial intelligence ("AI") system must seamlessly integrate this external information with conversational history to provide contextually rich and accurate responses.

The challenges associated with conversational memory in AI systems significantly impact the quality of chat-based interactions. Addressing these issues is crucial for developing AI systems that can provide coherent, relevant, and contextually appropriate responses. There is thus a need for innovative solutions that enhance the conversational memory capabilities of AI systems, ultimately improving user satisfaction and engagement.

### SUMMARY

Exemplary embodiments provide systems and methods for enhancing conversational recall in chat-based systems including steps of a method including: receiving a user input within a conversational session; indexing the message with metadata fields including a message identifier, a content, a timestamp, a user identification, a session identification, one or more keywords or at least two keywords, and one or more entities or at least two entities; expanding the user query using a lexical database to include synonyms, keywords, and entities for broader contextual recall; applying a portion of recentness filtering to prioritize recall of recent interactions, emulating short-term conversational memory; ranking potential responses using a context-sensitive scoring mechanism based on recentness, content relevance, keywords, and entities; storing and indexing a plurality of features ranked based on frequency; searching a database to manage contextual memory, leveraging keywords and/or entities to retrieve the ranked features from the indexed conversational history (e.g., thus identifying contextual memory significant to current context); generating a dynamic prompt template based on user input, session history, and contextual memory to guide the language model in producing coherent and relevant responses; generating, by a large language model in operative communication with the application, a response to the input user message based on the prompt template; and presenting the generated response to the user, ensuring it aligns with the current conversational context.

The method may further include wherein the indexing of messages includes the use of natural language processing (NLP) techniques to enhance the identification of keywords and entities. The method may further include wherein the query expansion process incorporates user-specific preferences and/or historical interaction data to refine the selection of synonyms and related terms. The method may further include wherein the recentness filtering applies a configurable temporal constraint to adapt to different conversational contexts and user needs. The method may further include wherein the context-sensitive scoring mechanism includes a feedback loop to adjust scoring parameters based on user satisfaction or interaction outcomes. The method may further include wherein the indexed database is dynamically updated to reflect changes in user interactions or external knowledge sources. The method may further include wherein the dynamic prompt template generation includes visual aids or graphical representations to assist the language model in understanding the conversational context. The method may further include wherein the proposed responses are generated by re-ranking, by a large language model ("LLM") in operative communication with or executed by the server, user inputs by determining if the keyword, entity, and user input message associated with each calculated score is relevant to the response.

Embodiments may include improved contextual memory integrity, retrieval precision, prompt compactness, and output reliability. Some embodiments may include entity normalization with entity typing and provenance linking to a message identifier, enabling entity-keyed recall across messages. Some embodiments may include introducing contradiction-aware suppression that excludes or down-weights older interactions when newer entity values conflict, reducing stale-context hallucinations. Some embodiments may include reciting hybrid ranking that combines probabilistic lexical relevance, semantic vector similarity, and recentness into a composite score. Some embodiments may include adding a session feature store for persistent user preference features, which are injected as constraints into dynamic prompt templates. Some embodiments may include reciting generating a structured, typed key-value context package and omitting raw conversational text when a memory budget is satisfied, improving token efficiency and determinism. Some embodiments may include adding post-generation constraint validation and regeneration with an augmented prompt template including an error signal when constraints are violated. Some embodiments may include specifying storing explicit user feedback and updating scoring weights based on that feedback to adapt ranking in-session.

Embodiments may include a computer-implemented conversational recall technique in which an application executed by a server may receive a user input in a conversational session and/or may store the message in an indexed conversational history with metadata such as a message identifier, content, timestamp, user identification, session identification, and/or one or more keywords and/or entities. The application may expand a user query using a lexical database to add synonyms and/or related keywords and/or entities, and the expanded query may be used to generate potential responses and/or identify candidate memories. The application may apply recentness prioritization to filter the potential responses and/or candidate memories to form filtered potential responses, and the application may rank the filtered potential responses using context-sensitive scoring that may consider recentness, content relevance, keywords, and/or entities. The application may store and/or index features ranked by frequency, may search a database to manage contextual memory by leveraging keywords and/or entities linked to ranked features from the indexed conversational history, may generate a dynamic prompt template based on the current user input, session history, and/or contextual memory, may cause a large language model (LLM) in operative communication with the application to generate a response based on the prompt template, and/or may present the response to the user based on the proposed responses and/or the dynamic prompt template.

Embodiments may include indexing to enhance identification of keywords and/or entities. Embodiments may include query expansion may incorporate user-specific preferences and/or historical interaction data to refine selection of synonyms and/or related terms. Embodiments may include recentness filtering including applying a configurable temporal constraint to adapt to different conversational contexts and/or user needs. The context-sensitive scoring may include a feedback loop that may adjust scoring parameters based on user satisfaction and/or interaction outcomes, and the contextual memory may be dynamically updated, including in a BM25-based implementation, to reflect changes in user interactions and/or external knowledge sources. Dynamic prompt template generation may include visual aids and/or graphical representations to assist the language model in understanding conversational context. Proposed responses may be generated and/or refined by re-ranking using an LLM executed by and/or in operative communication with the server, where the LLM may determine whether a keyword, entity, and/or the user input message associated with a calculated score is relevant to each response and may eliminate low-relevance candidates.

Embodiments may include specify entity-centric indexing and retrieval. For example, indexing may store, for each of multiple extracted entities, a normalized entity identifier, an entity type, and/or a provenance reference to the message identifier. Embodiments may include searching the database to retrieve contextual memory using the normalized entity identifier. Filtering based on recentness may include contradiction-aware suppression, where, if a more recent stored interaction contains a different value for a same entity type than an older stored interaction, the older stored interaction may be excluded and/or down-weighted for ranking. Ranking may compute a hybrid score that may combine a probabilistic lexical relevance score computed from indexed conversational history, a semantic similarity score computed from vector representations of the user input message and/or the indexed conversational history, and/or a recentness score, and ranked features may be selected based on the hybrid score.

Embodiments may include specifying that the plurality of features ranked by frequency may be maintained in a session feature store that may include at least one persistent preference feature derived from at least one prior user input message, and dynamic prompt generation may insert the persistent preference feature as a constraint applicable to the response. The dynamic prompt template may include a structured context package including typed key-value facts extracted from ranked features, and at least a portion of raw conversational text may be excluded from the dynamic prompt template when the typed key-value facts meet and/or exceed a memory budget. The generated response may be validated against at least one constraint represented in the dynamic prompt template, and, if a violation is detected, the system may cause regeneration using an augmented prompt template that includes an error signal identifying the violated constraint. Embodiments may include background memory maintenance including computing relevance scores for stored memories based on access frequency, recency, goal contribution, information uniqueness, and/or user confirmation signals. Embodiments may include applying graduated condensation to memories falling below an adaptive relevance threshold.

Embodiments may include a parallel processing architecture in which ranking may be performed via at least two concurrent pathways, such as a first pathway that may compute context relevance scores and a second pathway that may perform association network traversal, and results from the concurrent pathways may be merged prior to filtering. The context relevance scoring may be performed using three parallel assessment pathways, including an intent alignment pathway computing similarity between query intent and candidate memory intent, a goal coherence pathway computing overlap between active goals and historical goals, and/or a semantic relevance pathway computing embedding-based similarity, where pathway scores may be combined using adaptive weights. The goal coherence pathway may compute a Jaccard similarity coefficient defined as: $J \left(A, B\right) = \frac{\left|A∩B\right|}{\left|A∪B\right|}$ where *A* may represent goal components from current active goals and *B* may represent goal components from historical goals associated with a candidate memory. Adaptive weights may be selected based on a detected conversational stage, where an exploration stage may increase weight for semantic relevance, a task execution stage may increase weight for goal coherence, and/or a diagnostic stage may increase weight for intent alignment. Goal extraction may generate structured goals as tuples that may include an action verb, a target entity, a constraint set, and/or success criteria, and the system may maintain a goal stack tracking active, suspended, and/or completed goals. Intent extraction may classify the user input message into an intent taxonomy including information_seeking, task_execution, clarification_request, confirmation, exploration, and/or problem_solving.

Embodiments may include building and using a dynamic association network that may represent relationships among entities extracted from the conversational session and/or knowledge elements. The association network may be a directed weighted graph that may include co-occurrence edges, semantic relationship edges, temporal sequence edges, and/or knowledge-bridging edges connecting conversational entities to application knowledge nodes. Searching the database may include traversing the association network to determine keywords and/or entities. Embodiments may include retrieval that includes random walk with restart within a configurable depth limit in which node visit frequencies across multiple random walks may determine retrieval scores, thereby enabling retrieval of associated memories and/or knowledge nodes not explicitly mentioned in the user input message. Knowledge-bridging edges may be formed when entity linking confidence exceeds a configurable threshold, which may enable retrieval of external knowledge relevant to the user input message even when the external knowledge was not mentioned in the conversational session. Indexing may include a named entity recognition pipeline that may comprise a transformer encoder with conditional random field decoding to detect entity boundaries and/or assign entity types.

The named entity recognition pipeline may use a BERT-based transformer encoder comprising 12 encoder blocks with multi-head self-attention using 12 attention heads and 768 hidden dimensions, followed by a conditional random field decoding layer implementing Viterbi algorithm for optimal entity boundary detection. The model may recognize entity types including PERSON, ORGANIZATION, LOCATION, DATE, TIME, PRODUCT, TECHNICA_COMPONENT, ERROR_CODE, PROCESS_NAME, and DOMAIN_CONCEPT. In some embodiments, the model may achieve F1 scores exceeding 0.90 on domain-specific entity recognition with inference latency below 50 milliseconds per conversational turn, trained on domain-specific annotated datasets containing minimum 10,000 labeled conversational turns using BIO (Begin-Inside-Outside) tagging scheme.

Embodiments may include recentness prioritization by reciting neighborhood-aware temporal scoring. For example, filtering may compute an enhanced temporal score that may include a base recency score and/or a neighborhood activity boost, where the neighborhood activity boost may aggregate similarity-weighted recency scores of semantically related entities, thereby preserving relevance for entities whose semantic neighbors remain active in the conversational session.

Embodiments may include context reconstruction, in which the system may assess completeness of retrieved memory fragments against a domain-specific frame template defining required information slots, may identify unfilled slots, may retrieve targeted knowledge to fill identified gaps, and/or may synthesize a complete contextual representation from fragments and/or retrieved knowledge. Background maintenance may operate as a memory watchdog that may apply graduated condensation with multiple levels, such as metadata retention (content deleted while preserving keywords and/or entities), abstract preservation (content summarized while retaining semantic embeddings), and/or schema integration (episodic details merged into generalized patterns). Background maintenance may assign confidence tags based on source reliability, consistency verification across multiple sources, staleness detection for time-sensitive information, and/or confabulation risk assessment.

Embodiments consistent with the present disclosure include a system including one or more processors and one or more storage devices storing instructions that when executed by one or more processors, cause the processor to perform one or more steps of the methods disclosed herein. Embodiments consistent with the present disclosure include a computer processing system, computer, or server, including: a memory configured to store instructions such as a non-transitory computer-readable storage medium; and a hardware processor operatively coupled to the memory for executing the instructions to perform one or more steps of the methods disclosed herein.

### BRIEF DESCRIPTION OF THE DRAWINGS

In order to facilitate a fuller understanding of the present invention, reference is now made to the attached drawings. The drawings should not be construed as limiting the present invention but are intended only to illustrate different aspects and embodiments.
FIG. 1A is a diagram of a system for contextual recall for increasing relevancy and reducing hallucinations in artificial intelligence, in accordance with embodiments.
FIGS. 1B-1C are a diagram of a system for contextual recall for increasing relevancy and reducing hallucinations in artificial intelligence, in accordance with embodiments.
FIG. 2A is a method for enhanced contextual recall for a machine learning model in artificial intelligence, in accordance with embodiments.
FIGS. 2B-2C are a method for contextual recall for increasing relevancy and reducing hallucinations in artificial intelligence, in accordance with embodiments.
FIG. 3 is a diagram of a computing device for implementing certain embodiments of the present disclosure.

### DETAILED DESCRIPTION

Embodiments generally relate to systems and methods for contextual recall for increasing relevancy and reducing hallucinations in artificial intelligence.

Disclosed are systems and methods including receiving a user input within a conversational session; indexing the message with metadata fields including a message identifier, a content, a timestamp, a user identification, a session identification, one or more keywords or at least two keywords, and one or more entities or at least two entities; expanding the user input using a lexical database to include synonyms, keywords, and entities for broader contextual recall; applying recentness filtering to prioritize recall of recent interactions, emulating human short-term memory; ranking potential responses using a context-sensitive scoring mechanism based on recentness, content relevance, keywords, and entities; storing and indexing a plurality of features ranked based on frequency; searching a database to manage contextual memory, leveraging keywords and entities to retrieve the ranked features from the indexed conversational history; generating a dynamic prompt template based on user input, session history, and contextual memory to guide the language model in producing coherent and relevant responses; and presenting the generated response to the user, ensuring it aligns with the current conversational context.

The disclosed systems and methods may use a short-term memory to focus on immediate and relevant details, to track a flow of conversation, and recall recent points. A conversation may be a dialog between a user and a large language model including a prompt and a response to the prompt. The disclosed systems and methods may select and/or prioritize information pertinent to the current conversation or task by drawing connections between past and present exchanges and enhancing depth and relevance of interactions. The disclosed systems and methods may recognize related terminology and concepts between past and present conversations, allowing adaptation of responses and tasks based on a context and an intent of the conversation. The disclosed systems and methods may include prioritization of stored information guided by context, recentness and significance, improving timely and contextually appropriate recall. For example, capturing and appropriately prioritizing relevant past interactions leads to less or no hallucinations and increased relevance. Disclosed systems may apply priority to recent past interactions because incorrect information can be more detrimental than missing information in that it leads to harmful or unusable hallucinations and/or decreased relevance of responses.

Disclosed systems and methods may include indexing, query expansion, recentness filtering, context-sensitive scoring based on prioritization, and a probabilistic information retrieval model. Indexing may include storing each dialog portion with a message identifier, a content summary, a timestamp, a user identifier, a session identifier, one or more keywords or at least two keywords, and one or more entities or at least two entities, thus allowing efficient recall. The indexing emphasizes the importance of context and recent interactions and ensuring that responses address the current conversation or task. Query expansion may include using a lexical database to expand user queries with synonyms and/or incorporating keywords and entities identified in the current conversation or task to broaden a scope of recall without sacrificing contextual relevance. Query expansion may enable a flexible interpretation of an input by considering synonymous terms, keywords, and entities and thus capture a wider range of relevant information which improves accuracy and depth of responses.

Recentness filtering may include applying a temporal constraint to the machine learning model that limits recall to a number of recent interactions. Recentness filtering may allow prioritization of recent inputs. Recentness filtering may include excluding data from previous interactions that conflicts with data from more recent interactions. By emphasizing recent interactions, the system may reduce the likelihood of retrieving outdated or irrelevant responses. Recentness filtering further reduces hallucinations and enhances coherence of responses and helps align the model with current context of the conversation. Context-sensitive scoring for prioritization may include ranking responses based on recentness and/or content relevance.

In some embodiments, keywords and entities may be used in the scoring. Context-sensitive scoring for prioritization may ensure contextually appropriate responses are prioritized and thus allow integration of recentness, relevance, keywords, and entities of recent responses for a next response that is timely and contextually accurate. The probabilistic information retrieval model may manage contextual memory. The probabilistic information retrieval model may leverage keywords and entities to rank and retrieve the most relevant information (e.g., interactions, logs, scripts) from the indexed history of dialog. As an example, recentness filtering may re-rank memory based on keywords, entities, and/or recentness such that words or phrases that contain both keywords, entities, and/or recentness may be prioritized first, words or phrases that have a threshold of a number of keywords and/or entities may be prioritized next, words or phrases that have fewer keywords and/or entities but more recentness may be prioritized next, and words or phrases that have few to no keywords and/or entities and no recentness may be prioritized last. This results in efficiently retrieving and ranking relevant past interactions, enhancing accuracy, precision, speed of recall, and relevance of responses.

Limitations of existing models include storing past interactions in raw form, which takes large amount of memory, leads to slower response time, and higher costs in addition to inaccuracies and hallucinations. Further limitations include relying on a model's summarization ability, which may miss or misinterpret nuances. Further limitations include some interactions being missed or forgotten, leading to a loss of context and inaccuracies as discussed above. Examples of existing implementations of contextual memory include ConversationBufferMemory, ConversationSummaryMemory, ConversationBufferWindowMemory, ConversationSummaryBufferMemory, and ConversationKnowledgeGraphMemory. ConversationBufferMemory may store past interactions in raw form providing a large amount of information to the language model, but this consumes a large number of tokens and leads to slower response times and higher costs and can be limited by a model's token capacity. ConversationSummaryMemory may summarize a conversation history before passing it to the model, reducing token usage but relies on a model's summarization ability, which may not capture each nuance and requires additional tokens for summarization. ConversationBufferWindowMemory may retain only a specified number of recent interactions, creating a sliding window of memory, but older interactions are forgotten which may lead to loss of context. ConversationSummaryBufferMemory may combine summarization with a buffer window, summarizing older interactions while retaining recent ones in raw form but requiring careful tuning and can create an increased token count for shorter conversations. ConversationKnowledgeGraphMemory may use a knowledge graph to capture and organize information about entities and their relationships but are complex in implementation and require additional resources for knowledge graph management.

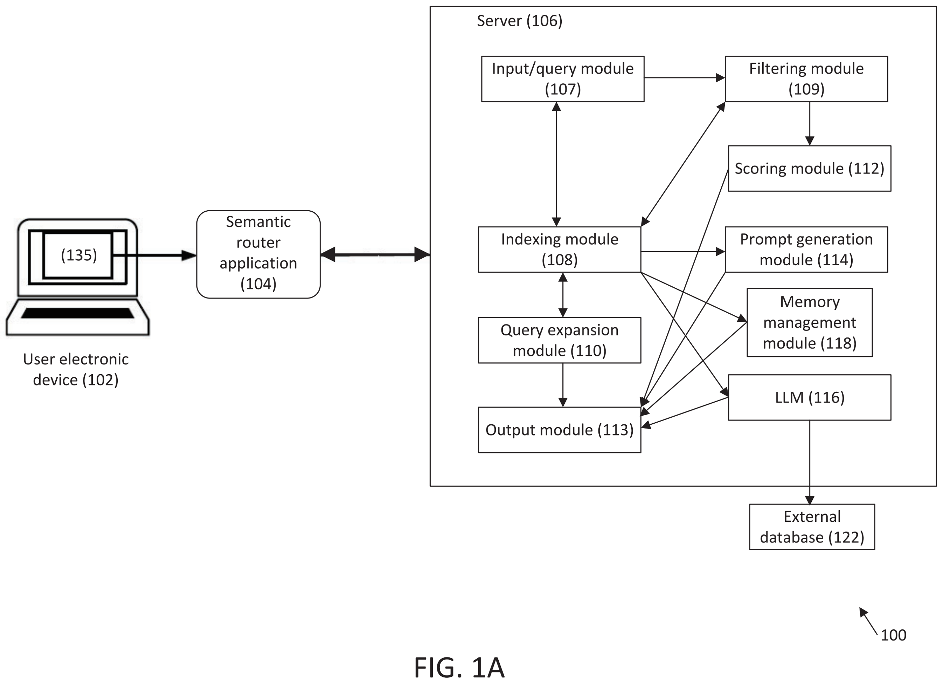

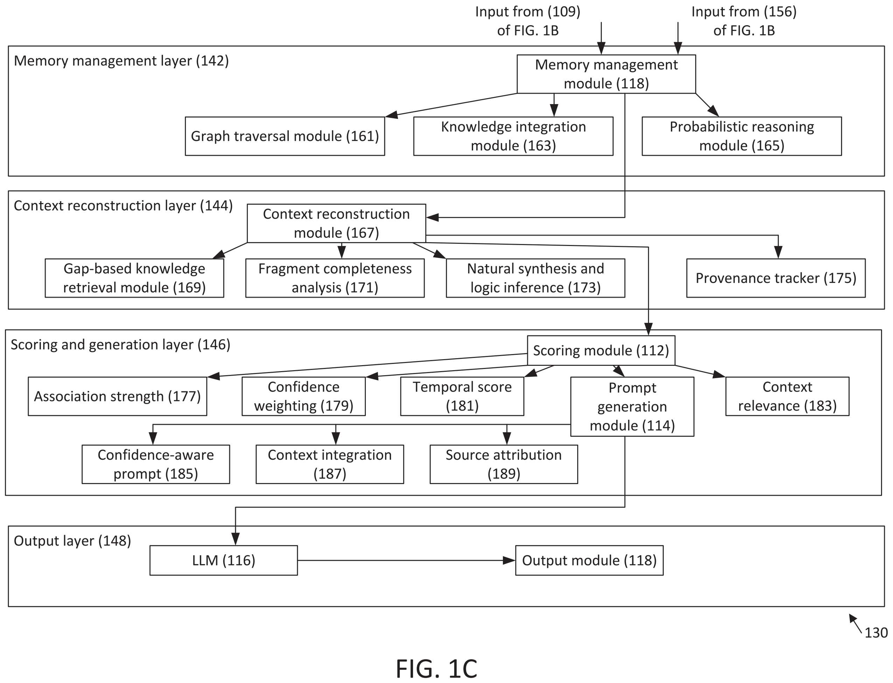

FIG. 1A is a diagram of a system for contextual recall for increasing relevancy and reducing hallucinations in artificial intelligence, in accordance with embodiments.

System 100 includes a user electronic device 102 executing a semantic router application 104 available through a user interface 135, a server 106 comprising a network or computer including a processor executing one or more software modules and a memory for storing data accessible by the one or more software modules and instructions to execute the one or more software modules. The one or more software modules may include one or more of an input/query module 107, an indexing module 108, a filtering module 109, a query expansion module 110, a scoring module 112, a prompt generation module 114, a large language model ("LLM") 116, and an output module 113. One or more modules may pull data from or store data in external database 122. External database 122 may include a memory of a network or a computer and/or a cloud-based memory.

The server 106 may be a server. The server may be part of an institution backend. The server may be part of a cloud-based server. The server may be a computer. In some embodiments, the server 106 may include one or more databases referenced by one or more of the software modules.

In accordance with embodiments, user electronic device 102 may be a user electronic device such as a personal communication device (e.g., tablet, phone), computer workstation, laptop, or other electronic processing device in operative communication with semantic router application 104 and/or server 106. User electronic device 102 may be configured to interact with semantic router application 104 through user interface 135. For instance, user device 102 may include a client application that allows a user of user electronic device 102 to interact with semantic router application 104. User interface 135 may include one or more graphical user interfaces to receive inputs and/or display information to the user. User interface 135 and/or semantic router application 104 may comprise one or more instructions executed by one or more processors of user electronic device 102. Semantic router application 104 may be a software production application provided by a service organization. In an exemplary aspect, semantic router application 104 may be a chat response application or system, a machine learning model generation and/or training application.

In some embodiments, semantic router application 104 may include an application programming interface ("API") request (e.g., call) to communicate with server 106 to respond to a chat, execute a semantic search, or conduct a task based on identified training data for a new or existing machine learning model. In some embodiments, semantic router application 104 may respond to an API call with a response to a prompt, a generated machine learning model, or a trained machine learning model.

In some embodiments, input or query module 107 may receive an input. The input may be an API call by an application, an input from a user, or a communication over a network asking or searching for an output from a machine learning model. Input or query module 107 may associate the input with a session identifier, a timestamp, and/or user identifier. Input or query module 107 may provide the input to indexing module 108, filtering module 109, and/or query expansion module 110 (not shown). Input or query module 107 may be a dialog comprising one or more of intent and/or keywords from semantic router application 104.

In some embodiments, indexing module 108 stores and indexes the received messages and associated outputs. The indexing module 108 may perform entity extraction and normalization such that, for each extracted entity, the indexing module 108 stores a normalized entity identifier and an entity type, and stores a provenance reference linking the extracted entity to the message identifier from which the entity was derived. The normalized entity identifier enables subsequent retrieval across variations in terminology, and the provenance reference enables traceability of each stored entity value back to a particular message.

The filtering module 109 may perform contradiction-aware suppression. In some embodiments, the filtering module 109 detects that a first stored interaction record includes a first value for a given entity type and that a second, more recent interaction record includes a second value for the same entity type that differs from the first value. In response, the filtering module 109 excludes the first interaction record from a candidate set for contextual recall, or down-weights the first interaction record prior to ranking, thereby reducing stale or conflicting context used for response generation.

A scoring module 112 may rank candidate records and/or candidate response-supporting features. The scoring module 112 may compute a hybrid score that includes a probabilistic lexical relevance component computed from the indexed conversational history and a semantic similarity component computed from vector representations. The scoring module 112 may further incorporate a recentness score to favor more recent records. The scoring module 112 may use the hybrid score to select ranked features for inclusion in a context package or prompt template.

The server 106 may maintain a session feature store that stores a plurality of features ranked based on frequency and confidence, including at least one persistent preference feature derived from prior user inputs within the session. In some embodiments, the session feature store may be maintained by the indexing module 108 and/or the scoring module 112, and the feature store is accessible to a prompt generation module 114. The prompt generation module 114 may insert the persistent preference feature into a dynamic prompt template as an enforceable constraint applicable to a current response.

The prompt generation module 114 may generate, from ranked features selected by the scoring module 112, a structured context package comprising typed key-value facts. Prompt generation module 114 may apply a memory budget that limits one or more of a token count, a number of facts, or a number of records included in the dynamic prompt template. When the typed key-value facts satisfy the memory budget, the prompt generation module 114 may exclude at least a portion of raw conversational text from the dynamic prompt template, thereby improving determinism and reducing token consumption while preserving the constraints required for accurate response generation.

Large language model 116 may be in operative communication with the server 106 and generates a response conditioned on the dynamic prompt template. The server 106 may include a validation component, implemented by the output module 113 and/or another module, that validates the response against at least one constraint represented in the dynamic prompt template, including constraints derived from the structured key-value context package and the persistent preference feature store. In response to determining that the response violates the at least one constraint, the server 106 may cause regeneration of the response by generating an augmented prompt template that includes an error signal identifying the violated constraint, and/or re-invoke the large language model 116 using the augmented prompt template.

Server 106 may receive an explicit user feedback signal indicative of relevance of a presented response. The explicit user feedback signal may be stored in association with at least one of the message identifier and the session identifier in an external database 122 and/or storage associated with the indexing module 108. The scoring module 112 may update one or more weights used in the hybrid scoring based on the explicit user feedback signal, thereby adjusting subsequent ranking within the conversational session to favor context and response patterns associated with higher relevance outcomes.

External database 122 may store the indexed conversational history, the normalized entity identifiers and entity types with provenance references, contradiction markers used by the filtering module 109, vector representations used for semantic similarity, the session feature store including persistent preference features, structured key-value context packages and memory budget parameters, constraint violation records and error signals used for regeneration, and explicit user feedback signals used to update scoring weights.

In some embodiments, indexing module 108 may be a software program which stores, indexes, and searches for one or more past inputs and/or responses based on metadata. The one or more inputs may be received by semantic router application 104 as part of a session. The session may be of a dialog (e.g., conversation) or part of a workflow task. The metadata may comprise one or more fields comprising a message identifier, a content, a timestamp, a user identifier, a session identifier, one or more keywords, and/or one or more entities. In some embodiments, a user message and/or system message may be added as metadata. The indexing module 108 may organize the one or more inputs based on the field of the metadata. Indexing module 108 may provide the past inputs and/or responses found based on the metadata to a query expansion module 110, a large language model ("LLM") 116, and/or prompt generation module 114.

In some embodiments, query expansion module 110 may use a lexical database to broaden a user query with one or more synonyms, keywords, and/or entities. For example, the use of the lexical database may include extracting one or more keywords from user input using generative AI. The keywords may be expanded by one or more synonyms from the lexical database. This may ensure broader contextual recall and relevance. Embodiments may include query expansion may incorporate user-specific preferences and/or historical interaction data to refine selection of synonyms and/or related terms.

In some embodiments, past related metadata determined by indexing module 108 may be added to a modified user query or modified input before query expansion in order to capture data pertinent to the user query or input. Filters applied by indexing module 110 may include a type (e.g., code, user entry, code generation request, troubleshoot, create, debug, etc.), a tag (e.g., a keyword, a summary), and/or a time window.

In some embodiments, scoring module 112 may rank potential responses to the input based on recentness, content relevance, keywords, and entities. Scoring module 112 may take potential responses initially organized in natural search order from memory management module 118 and re-rank them with a small language model ("SLM"), the small language model being trained to prioritize based on specific needs.

In some embodiments, prompt generation module 114 may create a dynamic prompt template. The dynamic prompt template may be based on one or more of user input, a history of the session, and contextual memory (e.g., from memory management module 118). Prompt generation module 114 may organize templates recursively. Each new template may use a previous template or be based on a collection of fields or entries and not a previous template.

In some embodiments, LLM 116 may perform a semantic search to determine one or more synonyms or similar words based on the identified keywords and/or entities and stored keywords and/or entities. LLM 116 may return proposed keywords and/or entities with a semantic search score below a threshold for search by the indexing module 108. As discussed further above, LLM 116 may rank or re-rank responses from memory management module 118 to ensure the most relevant responses are prioritized.

In some embodiments, memory management module 118 may search a database (such as the database associated with indexing module 108) to manage contextual memory. Memory management module 118 may leverage one or more keywords and/or entities to retrieve the ranked features from the indexed conversational history. Memory management module 118 may assign greater weights to words or phrases identified as keywords. Entities may be different from keywords. An entity may comprise one or more classifications of keywords (e.g., entity may be "greeting" if keyword is "hello"). Classifications may be determined from a database from linked pairs. A keyword may be an actual word or phrase from the user input message. Keywords may be nouns, interjections, or noun phrases.

Memory management module 118 may consider how often a term appears in a document. The more frequently a term appears, the more relevance may be assigned to the document (e.g., on a scale, for example 1 to 100). Rare terms within the document may be provided more weight because it reflects how common or rare a term is. Rare terms may be given more weight. Longer documents may be normalized so that a longer document, which may have more of a term by virtue of merely having more words, does not weigh significantly more heavily than a shorter document.

In some embodiments, output module 113 may output generated responses to the calling application, user application through semantic router application 104, and/or messaging application.

As an example, a financial institution may need to automate creation of one or more compliance rules to ensure adherence to regulatory standards. The institution may employ a LLM that transforms natural language inputs from compliance officers into executable notational code. The LLM may be configured to execute complex rule structures and provide transparency and accuracy in rule generation. For rule creation, challenges include that compliance officers provide rules in natural language, which takes significant manual effort to accurately interpret and transform into executable code. Other challenges include maintaining context and continuity throughout rule creation, ensuring that user inputs are correctly understood and applied. Other challenges include requiring user feedback and clarification to ensure generated rules align with intent and regulatory requirements. User feedback may be collected after each interaction. Users may rate relevance of a response. The user feedback may be stored with the interaction in the contextual memory. User feedback may be implemented immediately within a session so the LLM may adjust the next response with user expectations. User feedback may be stored for future sessions such that, for example, when similar queries arise, the system references past feedback to prioritize responses that previously received higher relevance scores. User feedback may only be considered if the associated interaction meets certain relevance criteria. This may ensure that only constructive and accurate user feedback influences the LLM. Incorporating user feedback into conversational memory may allow responses to become more tailored to an individual user's needs. This may improve user satisfaction and engagement.

Techniques and methods consistent with the present disclosure may include a structured indexing of user inputs, a query expansion for contextual breadth, recentness filtering for short-term recall, context-sensitive scoring for prioritization, contextual memory, and/or an interactive user feedback mechanism. Structured indexing of user inputs may include indexing natural language input from one or more users (e.g., compliance officers) with metadata including a session identifier, a timestamp, and/or a keyword related to the compliance rule. This may allow recall of specific details from previous interactions ensuring continuity in the rule creation process. Query expansion for contextual breadth may include using a lexical database to expand user queries with synonyms and related terms. This may allow understanding and responsiveness to a broader range of user inputs, even if phrasing changes, ensuring effective/accurate interpretation of compliance results.

Recentness filtering for short-term recall may include prioritization of recent interactions, focusing on more current inputs from users. This may allow timely provision and relevant feedback, reducing a likelihood of retrieving outdated information. Context-sensitive scoring for prioritization may include ranking potential interpretations of the user's input based on recentness and relevance, ensuring contextually appropriate understanding is prioritized. This may mirror recall patterns prioritizing more recent conversations if relevant, enhancing coherence of rule generation process. Contextual memory recall may include leverage to manage contextual memory, leading to efficient retrieval and rank of past interactions. This may allow provision of responses that are informed of the users' history, improving accuracy and personalization of the rule generation process. Interactive user feedback may include a feedback loop where users can confirm, correct, or refine the system's understanding of the constraints. This dynamic interaction may ensure that the generated rules align closely with the user's intent, reducing errors, and increasing efficiency. A large language model ("LLM") may check if the calculated score has a high relevance to the keywork, entity, and user input message, and eliminating entities with a lower relevance.

The rule generation LLM may, by implementing human-like memory recall, deliver more coherent, relevant, and personalized interactions during the rule creation process. An institution, for example a financial institution, may receive timely assistance for compliance that reflects past user inputs of compliance rules, leading to increased satisfaction and trust in the system's capabilities. This approach not only enhances the efficiency of rule generation but may ensure that the generated rules are accurate and aligned with regulatory requirements.

As another example, the system may generate an assistant (e.g., automated AI agent) that is configured to assist a software developer with coding tasks, debugging, and/or project management. The system may improve memory management, leading to efficient interactions and avoiding requiring repetitive tasks from developers. For code task management, challenges include a lack of effective recall of previous interactions, forcing developers to repeatedly provide the same information, such as project details, code snippets, and file uploads. Further challenges include retrieving irrelevant information (e.g., hallucinations), leading to confusion and frustration for developers who need precise and contextually relevant assistance. Further challenges include developers spending significant manual time cutting and pasting information, re-uploading files, and re-explaining their needs, reducing productivity and increasing the cognitive load.

Techniques and methods consistent with the present disclosure may include a structured indexing of user inputs, a query expansion for contextual breadth, recentness filtering for short-term recall, context-sensitive scoring for prioritization, and/or contextual memory. Structured indexing of user inputs may include indexing natural language input from one or more users (e.g., developers) with metadata including a session identifier, a timestamp, a project name, and/or a keyword related to the compliance rule. This may allow recall of specific details from previous interactions ensuring continuity and reducing the need for repetitive input in code development. Query expansion for contextual breadth may include using a lexical database to expand user (e.g., developer) queries with synonyms and related terms. This may allow understanding and responsiveness to a broader range of user inputs, even if phrasing changes, ensuring effective/accurate interpretation of compliance results. Recentness filtering for short-term recall may include prioritization of recent interactions, focusing on most current tasks and issues of users. This may allow timely provision and relevant feedback, reducing a likelihood of retrieving outdated information. Context-sensitive scoring for prioritization may include ranking potential interpretations of the user's input based on recentness and relevance, ensuring contextually appropriate understanding is prioritized. This may mirror human-like recall patterns, enhancing coherence of developed/managed code. Contextual memory recall may include leverage to manage contextual memory, leading to efficient retrieval and rank of past interactions. This may allow provision of responses that are informed of the users' history, improving accuracy and personalization of the rule generation process. Further, large language model ("LLM") may verify if the calculated score has a high relevance to the keywork, entity, and user input message, and eliminating entities with a lower relevance, thereby improving relevance of responses.

The code creation/management LLM may, by implementing human-like memory recall, deliver more coherent, relevant, and personalized interactions for users (e.g., developers). The system's improved memory management may reduce the need for repetitive input, allowing developers to focus on their tasks without unnecessary interruptions. This approach enhances productivity, reduces frustration, and increases trust in the LLM's capabilities, ultimately leading to a more efficient and satisfying user experience.

As another example, the system may generate a chat-based application to troubleshoot and resolve internet technology issues, for example in a deployment pipeline. The system may receive inputs of system problems for example from one or more deployment logs and scripts and may manage and recall relevant information, leading to efficiencies in problem resolution. For the troubleshoot chat-based application, challenges include lacking an ability to effectively recall and utilize previously uploaded logs and scripts, forcing users to repeatedly upload the same files for each troubleshooting session. Further challenges include retrieving irrelevant information, making it difficult for a user or team to focus on the specific issues at hand. Further challenges include a lack of context-aware responses resulting in a fragmented troubleshooting process, increasing the time and effort required to resolve deployment problems.

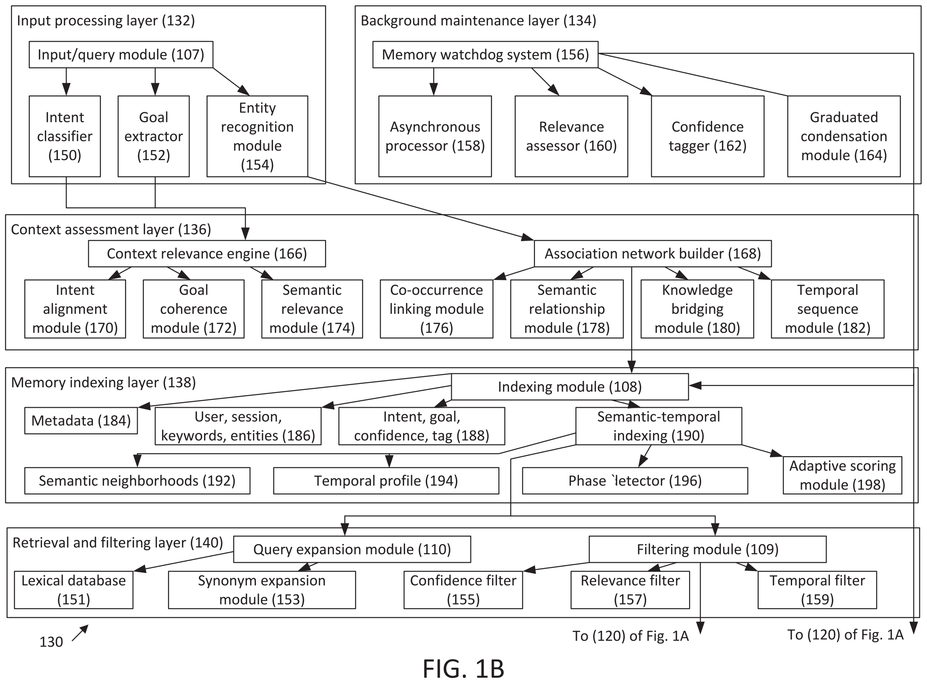

FIGS. 1B-1C illustrate system 130, which may implement an integrated contextual recall architecture that may address shallow context understanding, isolated memory fragments, brittle exact-match retrieval, static temporal weighting, and/or unbounded memory accumulation by orchestrating multi-dimensional relevance evaluation, dynamic association formation, context reconstruction, neighborhood-aware temporal modeling, and/or autonomous memory maintenance.

User electronic device 102 may provide user inputs through user interface 135 to semantic router application 104, and/or semantic router application 104 may communicate the user inputs to server 106 as conversational turns and/or application requests. Server 106 may include one or more processors executing modules that may jointly implement the multi-component solution of FIGS. 1B-1C.

Input/query module 107 may receive each input and may associate the input with a session identifier, a user identifier, a message identifier, and/or a timestamp. Input/query module 107 may detect, from the input, an interaction type and/or an urgency marker, such as whether the input is a debugging request, an instruction to generate structured output, and/or a request to review prior work. One or more of these attributes may be stored as metadata and may be used by downstream relevance scoring, filtering, and/or strategy selection.

Indexing module 108 may implement structured conversational indexing and may perform semantic enrichment of each message. Indexing module 108 may store each conversational turn as an indexed record including content and metadata and may further store a structured representation including extracted entities and/or keywords, intent attributes, and/or goal representations. In some embodiments, indexing module 108 may include and/or call a named entity recognition pipeline that may use a transformer encoder with conditional random field decoding to detect entities and/or their boundaries and to assign entity types. The resulting entities may be stored as normalized entity identifiers and entity types and/or linked to the message identifier for provenance. In addition to message-level indexing, indexing module 108 may maintain an entity-centric index, which may enable retrieval keyed by entity identifiers and/or may enable temporal analysis of entity mention patterns.

Query expansion module 110 may expand an input-derived query using a lexical database and/or session-derived terminology. In some embodiments, expansion may include controlled synonym insertion and/or entity-aware reformulation. For example, when a user asks to "fix the pipeline," query expansion module 110 may add terms such as "build," "deploy," and/or "CI," while preserving normalized entities previously identified for a relevant repository, service, and/or environment. This controlled expansion may increase recall without degrading precision and/or may support retrieval even when a user changes phrasing across turns.

Filtering module 109 may implement temporal gating and/or context gating. Filtering module 109 may apply recentness constraints and/or may apply neighborhood-aware temporal modeling and/or contradiction-aware suppression. For recentness constraints, filtering module 109 may restrict candidates to a time window and/or a message window. For neighborhood-aware temporal modeling, filtering module 109 may compute a temporal relevance that incorporates activity of semantically related entities, thereby preventing premature decay of contextually active topics when terminology shifts. For contradiction-aware suppression, filtering module 109 may exclude and/or down-weight older records that conflict with newer canonical entity values (for example, a corrected monetary threshold, a newer software version, and/or an updated status), which may reduce a likelihood that stale and/or incorrect context is injected into a prompt.

Scoring module 112 may implement a multi-dimensional context relevance engine. In some embodiments, scoring module 112 may evaluate retrieved candidates along parallel pathways that may include intent alignment, goal coherence, and/or semantic relevance, and may combine these signals using adaptive weights based on detected conversational stage. Intent alignment may be computed using vector similarity between a current intent distribution and a stored intent distribution for a candidate memory. Goal coherence may be computed using overlap between current active goals and historical goals and/or may include a Jaccard similarity computed over goal components. Semantic relevance may be computed using embedding-based similarity and/or a cross-encoder relevance model that processes query-memory pairs jointly. Scoring module 112 may further incorporate lexical relevance, including a probabilistic information retrieval score computed from indexed content, and/or may incorporate conflict penalties when candidate memories include superseded entity values. In some embodiments, scoring module 112 may select a retrieval strategy mode based on conversational dynamics, including exploratory mode, focused mode, diagnostic mode, and/or review mode, which may affect breadth of retrieval and/or relative weights given to temporal signals and/or semantic signals. The multi-dimensional relevance score may be computed as a weighted combination: Relevance_Score = w1·access_frequency + w2·recency + w3·goal_contribution + w4·information_uniqueness + w5·user_confirmation_signal, where weights w1 through w5 may be configurable and may adapt based on total memory size to maintain target capacity limits. Access frequency may use an exponential moving average favoring recent access patterns. Goal contribution may measure whether the memory contributed to successful goal completion using reinforcement learning rewards. Information uniqueness may be computed via inverse document frequency-style metrics identifying rare versus redundant information.

System 100 may form and/or use an association network that may reduce isolated memory fragments and/or may enable knowledge bridging. In an exemplary embodiment, indexing module 108 and/or memory management module 118 may cooperatively construct a directed and/or weighted graph in which nodes may represent conversational entities and/or knowledge elements stored in external database 122, and edges may represent co-occurrence relationships, semantic relationships, temporal sequence relationships, and/or knowledge bridging relationships. Co-occurrence edges may be weighted as a function of token distance within a turn; semantic relationships may be typed edges derived from relation extraction; temporal sequence edges may capture discussion flow between turns; and/or knowledge bridging edges may connect conversational entities to knowledge nodes in external database 122 when entity linking confidence exceeds a threshold. Memory management module 118 may retrieve context using graph traversal, including random walk with restart and/or another traversal technique within a configurable depth limit, thereby retrieving not only directly matched memories but associated memories and/or bridged knowledge nodes.

Memory management module 118 may manage contextual memory retrieval and/or compaction. In some embodiments, memory management module 118 may retrieve ranked features from indexed conversational history using keywords and/or entity identifiers and may apply term frequency and/or inverse document frequency weighting, including BM25-based scoring. Memory management module 118 may apply a memory budget to assemble a compact context package that may contain typed key-value facts, constraints, and/or references, rather than raw conversational text, thereby reducing prompt size and/or limiting opportunities for hallucinations. The context package may include provenance references to message identifiers and/or confidence indicators. In some embodiments, memory management module 118 may resolve conflicts across retrieved candidates by selecting canonical entity values based on recency and/or confidence and/or by excluding superseded values.

Prompt generation module 114 may generate a dynamic prompt template based on the received input, session history, and/or contextual memory. Prompt generation module 114 may organize the prompt template into fields that separate a current user request, verified contextual facts, constraints, and/or optional knowledge injections retrieved via association traversal. Prompt generation module 114 may include, in some embodiments, visual aids and/or graphical representations, including serialized graph fragments, flow representations, and/or tabular summaries, to assist large language model 116 in understanding entity relationships and/or conversational structure. Prompt generation module 114 may include guard instructions that may require large language model 116 to prefer canonical facts and/or to request clarification when a required fact is missing, thereby reducing unsupported assertions.

Large language model 116 may generate one or more candidate responses conditioned on the dynamic prompt template. In some embodiments, large language model 116 may perform re-ranking and/or verification of candidate responses by determining whether the candidate responses align with retrieved keywords, entities, and/or a current user input message, and/or by eliminating low-relevance entities and/or low-relevance candidates. System 100 may implement intelligent context reconstruction when retrieved memory fragments are incomplete. In an exemplary reconstruction workflow, memory management module 118 and/or prompt generation module 114 may perform a slot-filling completeness assessment against a domain-specific frame template to identify missing information slots and/or may trigger targeted retrieval from external database 122 to fill identified gaps, and may provide fragments and/or gap fills to large language model 116 for synthesis. In some embodiments, synthesis may use a mechanism that supports copying from retrieved sources while generating connective language and/or may include rule-based inference for gap filling. The generated response may carry provenance indications for portions derived from conversational memory, external knowledge, and/or inference.

Output module 113 may present the generated response to the user via semantic router application 104 and/or user interface 135. In some embodiments, output module 113 may perform response validation against constraints represented in a context package and/or prompt template and may trigger regeneration when a violation is detected. In some embodiments, output module 113 may store user feedback signals, such as confirmations, corrections, and/or ratings, and may provide the feedback to scoring module 112 to adjust scoring parameters over time, thereby implementing an adaptive feedback loop.

External database 122 may store indexed conversational history, entity indices, embeddings, association graphs, knowledge nodes, and/or other application knowledge repositories. External database 122 may store maintenance metadata used by an autonomous memory watchdog that may address unbounded memory accumulation. In an exemplary embodiment, server 106 may execute a background maintenance routine that computes multi-dimensional relevance scores for stored memories based on access frequency, recency, goal contribution, information uniqueness, and/or user confirmation signals. Based on the scores, the system may apply graduated condensation, including metadata retention, abstract preservation, and/or schema integration, and/or may apply confidence tagging based on source reliability, consistency verification, staleness detection, and/or confabulation risk. This maintenance may improve retrieval performance and/or reliability over long sessions by reducing irrelevant artifacts while preserving high-value constraints and/or facts.

System layers 130 may include a number of layers for contextual recall that may be executed by one or more computing devices to increase relevancy and/or reduce hallucinations in chat-based interactions by structuring input processing, context assessment, memory indexing, and/or retrieval and filtering.

Input processing layer 132 may be a layer executed by one or more computing devices that includes one or more modules and that is configured to receive a user input and/or an application request and may perform extraction and/or generation of intent, goals, keywords, and/or entities for downstream indexing and/or contextual recall operations.

Background maintenance layer 134 may be a layer executed by one or more computing devices that includes one or more modules and that may perform memory maintenance tasks asynchronously and/or according to a schedule, including relevance evaluation and/or confidence tagging and/or condensation of stored memories to improve retrieval precision and/or manage storage growth.

Context assessment layer 136 may be a layer executed by one or more computing devices that includes one or more modules and that may evaluate relevance of candidate memories to a current user query using multi-dimensional scoring and/or may build and/or update an association network that represents relationships among entities and/or knowledge elements.

Memory indexing layer 138 may be a layer executed by one or more computing devices that includes one or more modules and that may store indexed conversational history and/or derived representations, may maintain metadata and/or feature stores, and/or may compute semantic-temporal indices used for retrieval and/or ranking.

Retrieval and filtering layer 140 may be a layer executed by one or more computing devices that includes one or more modules and that may expand a query, retrieve candidate memories, and/or filter and/or rank candidate memories using confidence, relevance, and/or temporal constraints prior to prompt generation and/or response generation.

Input/query module 107 may receive a user input such as a message, a figure, and/or a call and/or an API request and may associate the input with a session identification, a user identification, a timestamp, and/or a message identifier, and may forward the input to one or more downstream modules for processing.

Intent classifier 150 may determine an intent representation of an input such as an intent label and/or an intent probability distribution, and may store and/or provide the intent representation for relevance scoring and/or indexing.

Goal extractor 152 may determine one or more goal representations from an input and/or session history, such as structured goal tuples and/or goal components, and may update and/or maintain a goal stack that tracks active goals and/or suspended goals and/or completed goals.

Entity recognition module 154 may identify entities and/or keywords in an input and may normalize entities into normalized entity identifiers and/or may assign entity types, and may output entity annotations for indexing, association building, and/or retrieval.

Memory watchdog system 156 may perform autonomous background memory maintenance and may coordinate relevance assessment and/or confidence tagging and/or condensation actions, and may update retention states for stored memories to maintain memory quality and/or bounded growth.

Asynchronous processor 158 may schedule and/or throttle one or more background maintenance tasks of the memory watchdog system 156 and may prioritize tasks based on available compute resources and/or system load to reduce interference with real-time conversational response generation.

Relevance assessor 160 may compute relevance scores for stored memory items based on access frequency, recency, goal contribution, information uniqueness, and/or user confirmation signals, and may output relevance scores used to select retention, condensation, and/or deletion actions.

Confidence tagger 162 may assign confidence tags and/or risk indicators to stored memory items based on source reliability, consistency verification across multiple sources, staleness detection for time-sensitive information, and/or confabulation risk assessment.

Graduated condensation module 164 may reduce memory footprint by condensing stored items according to relevance scores and/or confidence tags, including by applying metadata retention and/or abstract preservation and/or schema integration, and may delete and/or archive low-value content.

Context relevance engine 166 may compute a context-sensitive relevance score for candidate memories relative to a current user input and/or expanded query by combining multiple relevance signals using adaptive weights and/or configurable thresholds.

Intent alignment module 170 may compute similarity between a query intent associated with a current user input and a candidate memory intent associated with a stored memory item and may output an intent-alignment score that may contribute to the context-sensitive relevance score.

Goal coherence module 172 may compute overlap between current active goals and historical goals associated with a candidate memory, and may compute a Jaccard similarity coefficient *J*J(A, B) = |A ∩ B| / |A U B| over goal components, and may output a goal-coherence score that may contribute to the context-sensitive relevance score. Goal coherence may computation may produce values in range [0,1] where values approaching 1.0 indicate high goal alignment. Structured goal representations may comprise tuples including an action verb, a target entity, a constraint set, and success criteria, and the system may maintain a goal stack tracking active, suspended, and completed goals throughout the session

Semantic relevance module 174 may compute embedding-based similarity between a current user input and a candidate memory and/or may compute cross-encoder relevance scores, and may output a semantic relevance score that may contribute to the context-sensitive relevance score.

Co-occurrence linking module 176 may create co-occurrence edges between entities and/or keywords identified within a same conversational turn and may assign edge weights based on token distance, co-mention frequency, and/or salience.

Semantic relationship module 178 may create typed semantic relationship edges between entities such as depends_on, causes, resolves, part_of, and/or similar_to based on relation extraction and/or ontology mapping.

Knowledge bridging module 180 may create knowledge-bridging edges connecting conversational entities to one or more application knowledge nodes when an entity linking confidence exceeds a configurable threshold, thereby enabling retrieval of external knowledge relevant to a user query.

Temporal sequence module 182 may create temporal sequence edges that capture order and/or flow of discussion across turns and may store and/or update temporal transition information used for phase detection and/or temporal-aware retrieval.

Metadata 184 may include metadata stored for indexed messages and/or derived features and may include message identifiers, timestamps, content summaries, pointers to raw content, and/or other indexing fields used for retrieval and/or provenance.

User, session, keywords, entities 186 may include stored user identifiers and/or session identifiers and/or extracted keywords and/or extracted entities that may be associated with indexed conversational history, including normalized entity identifiers and/or entity types.

Intent, goal, confidence, tag 188 may include stored intent representations and/or goal representations and/or confidence tags and/or risk indicators and/or supersession markers and/or retention states that may be associated with indexed conversational history and used for retrieval, filtering, and/or ranking.

Semantic-temporal indexing 190 may compute and/or store combined semantic and temporal features used to prioritize recall, including neighborhood-aware temporal scores and/or phase-aware relevance adjustments for candidate memories and/or entities. For neighborhood-aware temporal modeling, filtering module 109 may compute an enhanced temporal relevance score comprising a base recency score plus a neighborhood activity boost. The base recency score may be computed as *e^*(-λ·Δt_entity) where Δt_entity represents time since last mention of the entity and λ represents a decay rate parameter. The neighborhood activity boost may be computed as a summation over semantic neighbors of similarity-weighted recency scores: Σ(similarity(entity, neighbor) · e^(-λ·Δt_neighbor)). This formulation prevents premature decay of entities whose semantic neighbors remain active in conversation.

Semantic neighborhoods 192 may include computed neighborhoods for entities and/or concepts, wherein each semantic neighborhood may include semantically related entities and/or concepts with similarity weights that may be used for neighborhood-aware scoring and/or retrieval expansion.

Temporal profile 194 may include a temporal profile computed for an entity and/or memory item and may include mention timestamps and/or access timestamps and/or recency measures and/or decay parameters and/or mention distributions over time.

Phase detector 196 may determine a conversational phase and/or stage based on temporal profiles and/or entity mention distributions and/or transition patterns, and may output phase indicators used to adjust relevance weighting and/or retrieval strategies.

Adaptive scoring module 198 may adjust scoring parameters and/or weight allocations for relevance scoring based on outputs of semantic-temporal indexing 190 and/or the phase detector 196, including adjusting decay rates, neighborhood influence coefficients, and/or weight allocations among intent alignment, goal coherence, and/or semantic relevance.

As an illustrative operational example, during a compliance-rule authoring session, a user may correct an earlier monetary threshold. Indexing module 108 may store the corrected threshold with provenance, filtering module 109 may suppress the superseded threshold based on contradiction-aware suppression, scoring module 112 may rank the corrected threshold higher based on recency and/or entity-value canonicalization, memory management module 118 may package the canonical threshold as a typed fact, prompt generation module 114 may insert the fact as a constraint into the dynamic prompt template, and large language model 116 may generate a rule that uses the corrected threshold rather than the superseded value. As another illustrative operational example, during troubleshooting of a deployment pipeline, the association network may enable retrieval of a relevant knowledge node from external database 122 even if the user does not restate full error context, because knowledge bridging edges may connect an extracted error signature entity to a corresponding remediation procedure node, and memory management module 118 may inject that procedure into the context package under a configured depth limit and/or memory budget.

Accordingly, with reference to FIGs. 1B-1C, modules 107, 108, 110, 109, 112, 113, 118, 114, 116, and/or 120 may cooperate with external database 122 to implement multi-dimensional relevance scoring with adaptive weighting, dynamic association networks with knowledge bridging and/or probabilistic traversal, gap-driven context reconstruction with provenance, neighborhood-aware temporal modeling, and/or autonomous memory maintenance with condensation and/or confidence tagging, thereby improving contextual recall accuracy and/or reducing hallucinations in chat-based interactions.

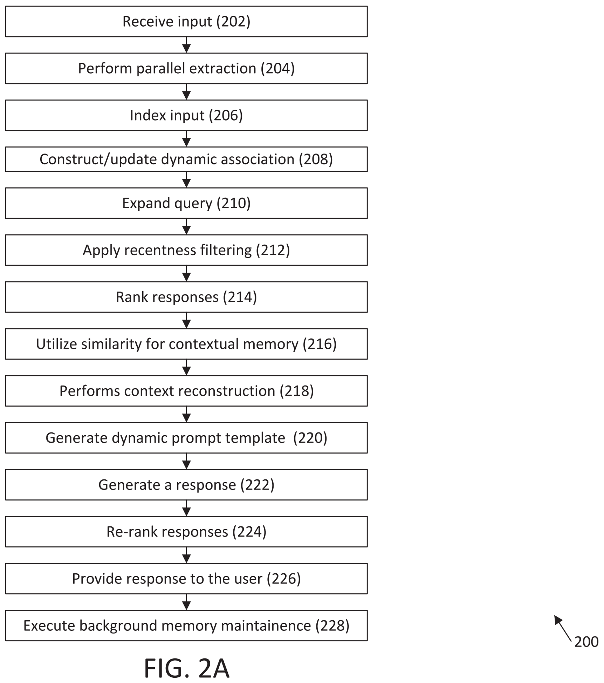

FIG. 2A illustrates an exemplary computer-implemented method 200 for contextual recall in a conversational system that improves relevancy and reduces hallucinations by controlling how prior interaction data are captured, indexed, retrieved, filtered, ranked, structured, and injected into a runtime prompt used to condition a machine-learned language model. In some embodiments, method 200 is performed by one or more processors executing instructions stored on one or more non-transitory computer-readable storage media, where the instructions implement an input module, an indexing module, a query expansion module, a recentness filtering module, a scoring module, a contextual memory manager, a prompt template generator, and an output module. In some embodiments, method 200 improves operation of a computer system by reducing repeated transmission of large conversational histories, reducing memory bandwidth and token consumption, reducing latency in retrieval, and reducing erroneous outputs caused by stale or conflicting context.

At 202, the system receives an input associated with a conversational session. The input may be a user message, an application message, a tool output, a log excerpt, a code excerpt, or an API call. In some embodiments, the system assigns the input a message identifier and associates the input with a session identifier, a user identifier, and a timestamp. In some embodiments, the system generates a canonical representation of the input to preserve machine-relevant structure while avoiding repeated storage of redundant content. For example, if the input includes a multi-megabyte log file, the system may compute a content hash for the log file, store the log file out-of-band (or as a referenced artifact), and store within the conversational index only a pointer to the artifact together with extracted structured features such as error signatures, stack trace frames, service names, build identifiers, and environment tags.

At 204, the system may perform parallel extraction of intent classification, goal representation, and/or entity recognition from the received input. Intent classification may use a transformer model to generate intent probability distributions across categories including information_seeking, task_execution, clarification_request, confirmation, exploration, and problem_solving. Goal extraction may generate structured goal tuples comprising an action verb, a target entity, a constraint set, and/or a success criteria, and may maintain a goal stack tracking active, suspended, and/or completed goals. Entity extraction may use a named entity recognition pipeline.

At 206, the system indexes the received input into a multi-field conversational index. In some embodiments, indexing includes storing a record having fields including at least a message identifier, session identifier, user identifier, timestamp, content (or content summary), one or more keywords, and one or more entities. In some embodiments, keywords comprise terms extracted from the input based on syntactic or statistical salience, and entities comprise normalized identifiers mapped to entity types. Entity types may include, by way of example, a person role, an organization service, a file path, a function name, an error code, a policy constraint, a monetary amount, a date range, and/or an environment. In some embodiments, an indexing step stores a "fact table" derived from the input, where each fact table entry includes an entity type, an entity value, a confidence score, and a provenance reference to the message identifier. In some embodiments, the indexing step stores both a lexical representation for term-based retrieval and a semantic representation for similarity retrieval. In some embodiments, the indexing step stores one or more contradiction markers indicating whether the input supersedes a previously stored value for a same entity type.

In an illustrative example, where know your customer may be implemented ("KYC") during a compliance-rule authoring session, a user message states, "transfers above $10,000 unless KYC is verified; earlier I said $5,000 but that was wrong." The indexing step may store fact entries including a transfer threshold and a condition of a verified you're your customer, KYC, and may store a supersession entry indicating that a previously stored transfer threshold (e.g., of a less amount) is superseded by the newer value.

At 208, the system constructs and/or updates a dynamic association network linking conversational entities to knowledge elements. The association network may be a directed weighted graph where edges represent co-occurrence relationships weighted by token proximity, semantic relationships derived from relation extraction, temporal sequence relationships capturing discussion flow, and knowledge bridging relationships connecting conversational entities to application knowledge when entity linking confidence exceeds a threshold. At query time, the system may perform graph traversal using random walk with restart within a configurable depth limit to retrieve associated memories and knowledge nodes. The directed weighted graph may include edges formed through four mechanisms: co-occurrence edges weighted as w = 1/(1 + token_distance), semantic relationship edges with typed labels derived from relation extraction, temporal sequence edges capturing discussion flow, and knowledge-bridging edges connecting conversational entities to application knowledge nodes when entity linking confidence exceeds a threshold.

At 210, the system expands a query representation of the input to increase recall without indiscriminately broadening retrieval. In some embodiments, query expansion uses a lexical database to add synonyms, morphological variants, and related terms for extracted keywords and entities. In some embodiments, query expansion is constrained by entity typing so that expansions that would change the meaning of a typed constraint are excluded. For example, if an entity type is a file path, expansions may include path aliases observed in the same session, but may exclude unrelated lexical synonyms. In some embodiments, query expansion is further constrained by a session-local vocabulary cache that is learned from prior messages in the session, thereby allowing retrieval of previously used project-specific terms that may not appear in general lexical resources. In some embodiments, query expansion generates an expanded query object that includes (i) original terms, (ii) expanded terms, (iii) normalized entity identifiers, (iv) an inferred intent label, and (v) one or more required output attributes (e.g., "return code," "return explanation," "return Java structured schema," "return patch diff").

In an illustrative example, a developer asks, "Why does staging fail after the container build?" The query expansion may add terms such as "Docker build," "image layer," "CI," "pipeline," "staging environment," and may add an entity identifier for the particular service name and repository previously mentioned in the same session.

At 212, the system applies recentness filtering to select a candidate subset of indexed interaction records for contextual recall. In some embodiments, recentness filtering uses a configurable temporal window, a message-count window, or a token-budget window. In some embodiments, recentness filtering includes contradiction-aware suppression that excludes or down-weights older records that conflict with newer records for a same entity type. In some embodiments, recentness filtering further includes a "confidence decay" to reduce reliance on older, lower-confidence facts. In some embodiments, recentness scoring uses a monotonic decay function such as: R(Δt) = e^(-λ·Δt), where Δt is elapsed time (or elapsed message count) and $\lambda $ is a configurable decay parameter. In some embodiments, a recentness filtering step prevents the conversational system from reintroducing outdated context that is more likely to produce hallucinations than an omission. In some embodiments, recentness scoring may use an enhanced temporal relevance formula comprising a base recency score plus a neighborhood activity boost: e^(-λ·Δt_entity) + α-Σ_n∈N(sim(e,n)·e^(-λ·Δt_n)), where N represents semantic neighbors of entity e, sim(e,n) represents semantic similarity, and α is a neighborhood influence coefficient. This formulation prevents premature decay of entities whose semantic neighbors remain active in conversation.

At 214, the system ranks candidate interaction records using a context-sensitive scoring mechanism to identify which prior content is most relevant to the current input. In some embodiments, the scoring mechanism combines (i) lexical relevance, (ii) semantic similarity, (iii) entity overlap, (iv) recentness, and (v) conflict penalties, into a single ranking score. In some embodiments, lexical relevance is computed using a probabilistic information retrieval model such as BM25 over content summaries, extracted terms, or a feature store. In some embodiments, semantic similarity is computed as a cosine similarity between embedding vectors. In some embodiments, entity overlap is computed as a weighted overlap of entity identifiers, where rare or session-critical entity types are assigned larger weights than common types. In some embodiments, conflict penalties are applied when a candidate record contains a value that inconsistent with a higher-confidence or newer value for a same entity type. In some embodiments, the scoring mechanism evaluates candidates along parallel assessment pathways. An intent alignment pathway computes cosine similarity between a current intent distribution and stored intent distributions. A goal coherence pathway computes overlap between current active goals and historical goals using a Jaccard similarity coefficient J(A,B) = |A∩B| / |A∪B| over goal tuple components. A semantic relevance pathway computes embedding-based similarity using a cross-encoder that processes query-memory pairs jointly. The pathway scores combine through adaptive weights selected based on detected conversational stage, with exploration stage favoring semantic breadth, task execution stage favoring goal coherence, and diagnostic stage favoring intent precision. Conversational stages may include introduction, exploration, decision, execution, and review phases, wherein exploration stage may favor semantic breadth, task execution stage may favor goal coherence, and diagnostic stage may favor intent precision.

In some embodiments, the system maintains a feature store comprising session features ranked by frequency and confidence, wherein repeated constraints or preferences are promoted to higher-weight features. For example, if a user repeatedly requests "concise responses," the system may store a concise style preference feature and apply the feature as a persistent constraint in later prompt templates.

At 216, the system utilizes similarity for contextual memory selection to convert ranked records into a compact, structured context package suitable for conditioning a language model. In some embodiments, 240 includes selecting a top subset of ranked records and extracting from the records a set of atomic, machine-actionable facts, constraints, and references, each with provenance back to message identifiers. In some embodiments, 216 performs a second-stage verification that rejects candidate facts that are only weakly supported or that do not align with the current intent. In some embodiments, step 216 applies a memory budget, such as a maximum number of facts, a maximum number of records, or a maximum estimated token count, and compresses selected context into typed key-value entries rather than raw conversational text. In some embodiments, 216 constructs a conflict graph keyed by entity type, where nodes represent candidate values and edges represent incompatibility, and the system selects the newest or highest-confidence value as the canonical value to include in the context package.

In the compliance example, rather than including multiple prior messages discussing thresholds, the system may include a single canonical fact entry of a transfer threshold with provenance pointing to the message that corrected the earlier value, and may omit the superseded transfer threshold (e.g., of a less amount) to reduce the probability that the language model repeats the obsolete threshold.

At 218, the system may perform context reconstruction when retrieved memory fragments are incomplete. The system may assess completeness against domain-specific frame templates defining required information slots for common query types. For identified gaps, the system may generate targeted queries against application knowledge repositories to retrieve gap-filling information. The system may synthesize complete context using a mechanism that supports copying from retrieved sources while generating connective language, and may apply rule-based inference for logical gap filling. The reconstructed context may carry provenance indicators for portions derived from conversational memory, application knowledge, or inference.

At 220, the system generates a dynamic prompt template based on the current input, session history, and the context package. In some embodiments, the prompt template is structured to separate instructions from facts and to separate facts from the user's current request, thereby reducing inadvertent blending of unrelated content. In some embodiments, the prompt template includes explicit slots for (i) the inferred intent, (ii) required output format, (iii) extracted and verified constraints, (iv) canonical facts with provenance identifiers, (v) user preferences, and (vi) a conflict-avoidance directive instructing the language model to prefer canonical facts and to request clarification when a required entity value is missing. In some embodiments, the prompt template includes artifact pointers (e.g., file hashes or repository paths) rather than embedding entire artifacts, and includes a retrieval instruction for the system to fetch artifact slices only when needed, thereby reducing repeated token consumption. In some embodiments, the prompt template includes a "no-fabrication guard" specifying that when the context package does not include sufficient support for a factual assertion, the system should ask a question or explicitly state that the information is unavailable.

In an illustrative debugging example, the context package may include a programming language, a logging framework, and a file path, and the prompt template may instruct the model to produce a patch that preserves the existing logging style and adds null checks, while forbidding introduction of new libraries not present in the indexed context.

At 222, the system generates a response using a language model conditioned on the dynamic prompt template. In some embodiments, the response is generated in an output format specified by the prompt template, such as source code, a compliance rule in a target notation, or a troubleshooting plan. In some embodiments, the system performs post-generation validation to check whether the response conforms to canonical facts and constraints in the context package. For example, if the response includes a monetary threshold, the system may verify that the threshold matches the canonical transfer threshold fact and, if not, may cause a regeneration or may request clarification.

At 224, the system re-ranks responses to improve alignment with the current conversational context. In some embodiments, 224 includes generating multiple candidate responses and scoring the candidates according to (i) constraint satisfaction, (ii) entity-value consistency, (iii) provenance alignment, (iv) recency alignment, and (v) format correctness. In some embodiments, 224 includes discarding candidates that rely on superseded facts or that introduce unsupported entities. In some embodiments, 224 includes selecting a highest-ranked candidate response and optionally generating an explanation that references which canonical facts were applied, without necessarily exposing internal identifiers to the end user.

At 226, the system provides the response to the user via a user interface or via an API response to a calling application. In some embodiments, the system stores the delivered response as a new indexed interaction record with extracted keywords, entities, and outcome metadata, thereby enabling iterative improvement in subsequent turns. In some embodiments, the system stores user feedback (e.g., confirmation, correction, or rating) as an additional signal that adjusts future ranking weights and conflict resolution.

At 228, the system may execute background memory maintenance to address unbounded memory accumulation. The maintenance routine may compute multi-dimensional relevance scores based on access frequency, recency, goal contribution, information uniqueness, and user confirmation signals. Based on scores relative to adaptive thresholds, the system may apply graduated condensation including metadata retention preserving keywords and entities while deleting content, may abstract preservation applying extractive summarization while retaining embeddings, and/or integrate schema including merging episodic details into generalized patterns. The system may apply confidence tagging assessing source reliability, consistency verification, staleness detection, and/or confabulation risk. This maintenance may execute asynchronously during idle periods with resource throttling to prevent interference with real-time processing.

Exemplary end-to-end operation may be as follows. In a compliance-authoring session, the user may state an incorrect threshold and later corrects it. When the user subsequently requests executable rule generation, the system may perform contradiction-aware recentness filtering and conflict-graph canonicalization to retrieve only the corrected threshold and the associated KYC condition, may construct a compact context package with provenance, generates a structured prompt template that instructs the model to avoid unsupported assertions, may re-rank candidate outputs for constraint satisfaction, and may provide a final rule that reflects the corrected threshold. In a software troubleshooting session, the user may upload logs and request a diagnosis; the system may store the logs as referenced artifacts with extracted error signatures, may retrieve only the most recent relevant signature and its associated environment entity, may construct a token-budgeted context package, and may generate a response that focuses on the actual failing layer rather than hallucinating unrelated causes.

Accordingly, FIG. 2A depicts a specific, implementation-oriented pipeline that reduces hallucinations and improves relevancy by (i) indexing conversational inputs into structured metadata and typed facts with provenance, (ii) performing constrained query expansion, (iii) applying contradiction-aware recentness filtering, (iv) ranking candidates using hybrid lexical-semantic scoring with conflict penalties, (v) producing a compact, token-budgeted context package that favors canonical entity values, (vi) generating a structured dynamic prompt template with explicit guards against fabrication, (vii) generating and re-ranking candidate responses for constraint satisfaction, and (viii) delivering an output that remains consistent with the most recent verified session context or when it is inconsistent with a higher-confidence or newer value for a same entity type.

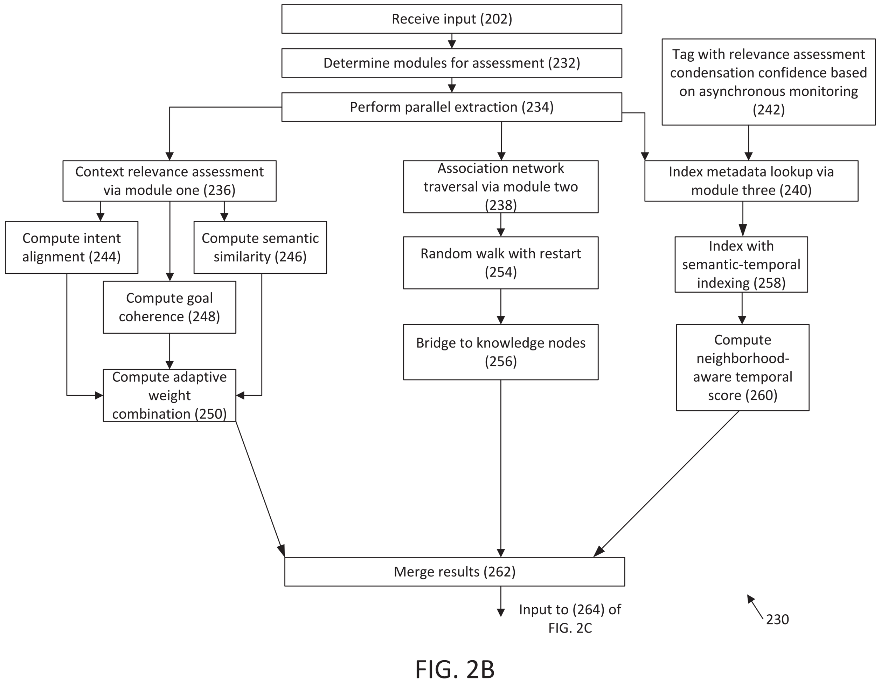

FIGS. 2B-2C are a flowchart of method 320 illustrating an exemplary contextual recall process executed by a server to increase relevancy and reduce hallucinations in chat-based interactions by performing parallel retrieval and scoring pathways and by maintaining contextual memory via asynchronous background maintenance. In some embodiments, the operations of FIG. 2B may be performed within a conversational session responsive to a current user query input 202.

FIG. 2B is a flowchart illustrating an exemplary method portion of method 230 for contextual recall that may increase relevancy and/or reduce hallucinations in chat-based interactions by performing parallel assessment pathways and merging results before downstream filtering and/or response generation. At 202, the system may receive input, such as a user input message within a conversational session and/or an application request and/or an API call. The received input may be associated with a message identifier, a timestamp, a user identification, and/or a session identification.

At 232, the system may determine modules for assessment. In some embodiments, determining modules for assessment may include selecting two or more assessment modules based on an input type, an inferred intent, a session state, a detected conversational phase, and/or an available compute budget. For example, for a troubleshooting input, the system may select an assessment configuration that emphasizes intent alignment and/or association traversal, while for a rule-generation input the system may select an assessment configuration that emphasizes goal coherence and/or semantic similarity.

At 234, the system may perform parallel extraction. Parallel extraction may include extracting one or more of intent information, goal information, keywords, entities, and/or embedding representations from the input and/or from candidate memory items. In some embodiments, the extracted information may be stored as metadata and/or may be provided as inputs to parallel assessment modules. Structured goal representations may be formalized as tuples comprising an action verb, a target entity, a constraint set, and success criteria. The system may maintain a goal stack tracking active, suspended, and completed goals. Intent categories may include information_seeking, task_execution, clarification_request, confirmation, exploration, and problem_solving.

At 236, the system may perform context relevance assessment via module one. In some embodiments, module one may compute relevance of candidate memories and/or candidate response-supporting items relative to the current input using multiple relevance signals. Relevance assessment may compute multi-factor relevance scores based on access frequency using exponential moving average, recency using temporal decay, goal contribution measuring successful goal completion, information uniqueness using inverse document frequency-style metrics, and user confirmation signals tracking positive and negative feedback. Condensation may apply graduated levels including metadata retention wherein content is deleted while preserving keywords, entities, intent, timestamp, and outcome; abstract preservation wherein extractive summarization reduces content while retaining semantic embeddings; and schema integration wherein episodic details merge into generalized patterns with instance deletion after pattern extraction. Confidence tagging may assess source reliability, consistency verification, staleness detection, and confabulation risk using pattern matching to detect hallucination signatures.

In an example, a user input 202 may request generation of an executable compliance rule after prior corrections to a monetary threshold. At 204, the server may extract entities including a monetary threshold and KYC verification, and may extract a task_execution intent. At 236, the system may favor memories with aligned intent and high goal coherence to the active goal of generating a correct rule, while contradiction handling during multi-stage filtering that may suppress older memories reflecting a superseded threshold.

At 244, the system may compute intent alignment, such as by computing similarity between a query intent representation associated with the input and a stored intent representation associated with a candidate memory. At 246, the system may compute semantic similarity, such as embedding-based similarity between the input and candidate memories and/or a cross-encoder relevance score.

At 248, the system may compute goal coherence, such as overlap between active goals for the session and historical goals associated with candidate memories, including, in some embodiments, using a Jaccard similarity coefficient computed over goal components. At 250, the system may compute an adaptive weight combination, where the computed intent alignment, semantic similarity, and/or goal coherence scores may be combined using adaptive weights to generate a context relevance score. The adaptive weights may be selected based on a detected conversational stage and/or urgency, for example an exploration stage may increase weight for semantic similarity, a task execution stage may increase weight for goal coherence, and/or a diagnostic stage may increase weight for intent alignment.

At 238, the system may perform association network traversal via module two. Module two may operate on a dynamic association network that represents relationships among entities extracted from the conversational session and knowledge elements. At 254, the system may perform random walk with restart over the association network to identify and/or score nodes associated with the entities extracted from the input. The traversal may be performed within a configurable depth limit and/or within a traversal budget.

At 256, the system may bridge to knowledge nodes, such as by traversing knowledge-bridging edges that connect conversational entities to application knowledge nodes, thereby enabling retrieval of external knowledge associated with the input even when that external knowledge was not explicitly mentioned in the input. The server may access one or more memories of the knowledge nodes. The memories may include indexed conversational turns, stored features, stored constraints, stored artifacts, embeddings, and/or knowledge nodes. In some embodiments, memories may be stored in an external database and retrieved by keywords, entities, semantic similarity, and/or probabilistic ranking. Background memory maintenance may include computing relevance scores for stored memories based on access frequency, recency, goal contribution, information uniqueness, and user confirmation signals, and applying graduated condensation to memories falling below an adaptive relevance threshold. The adaptive relevance threshold may be based on total memory size (e.g., maintaining target memory capacity limits).

At 240, the system may perform index metadata lookup via module three. Module three may retrieve candidate items from an index based on metadata fields such as session identifier, user identifier, timestamp, keywords, entities, and/or message identifiers. In some embodiments, module three may retrieve compact feature representations and/or stored key-value facts rather than raw conversational text.

At 258, the system may index with semantic-temporal indexing. In some embodiments, semantic-temporal indexing may include computing and/or updating a semantic neighborhood representation for an entity and/or computing and/or updating a temporal profile for the entity and/or memory item. At 260, the system may compute neighborhood-aware temporal score, which may include a base recency score and/or a neighborhood activity boost that aggregates similarity-weighted recency scores of semantically related entities, thereby maintaining relevance for an entity whose semantic neighbors remain active in the conversational session. The neighborhood-aware temporal score may be computed as: enhanced_score = e^(-λ·Δt_entity) + α·Σ(similarity(entity, neighbor)·e^(-λ·Δt_neighbor)), wherein Δt_entity represents time since last mention of the entity, the summation extends over semantic neighbors within a similarity threshold, similarity represents embedding-based cosine similarity, and α represents a configurable neighborhood influence coefficient.

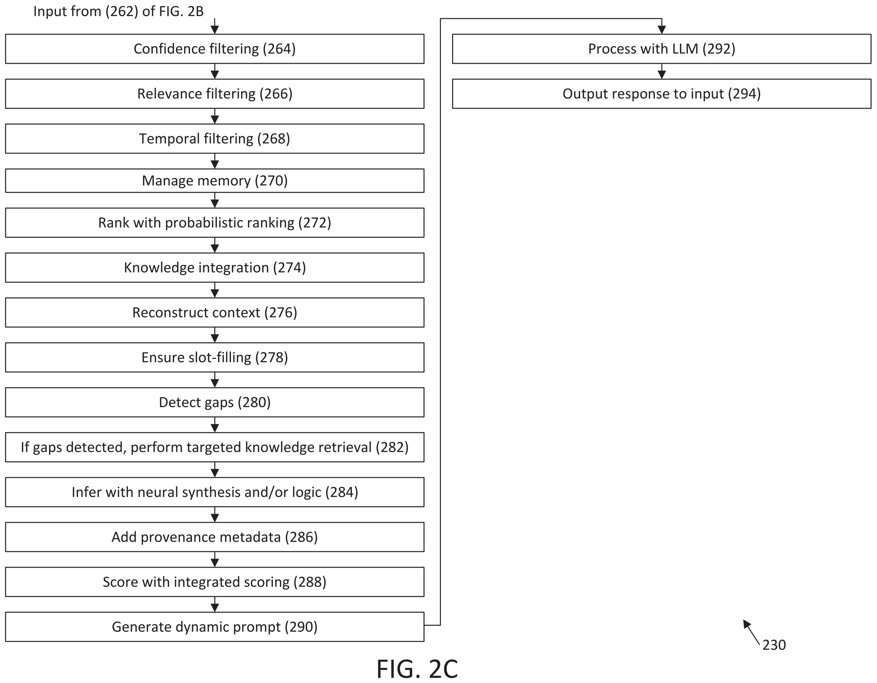

At 262, the system may merge results produced by one or more of module one at 236, module two at 238, module three at 240, and/or semantic-temporal scoring at 258 and 260. Merging at 262 may include deduplication of overlapping candidates, normalization of entity identifiers, conflict detection for incompatible entity values, canonicalization to prefer newer and/or higher-confidence values, and/or assembly of a candidate context set to be refined by FIG. 2C. In some embodiments, output of 262 may serve as input to 264 of FIG. 2C.

At 242, the system may tag one or more retrieved items with relevance assessment and/or condensation confidence based on asynchronous monitoring. In some embodiments, asynchronous monitoring may compute confidence tags and/or condensation levels for stored memory items, and tagging at 242 may include associating candidate items with provenance references, confidence scores, risk indicators, and/or condensation states that may affect downstream filtering and/or inclusion in a prompt.

An illustrative example of FIG. 2B includes a compliance-rule generation session in which a user corrects a previously stated monetary threshold. At 202, the system may receive the correction and/or a subsequent request to generate a final rule. At 236, module one may compute high intent alignment and/or high goal coherence for the correction message and may compute lower relevance for earlier messages that contain a superseded threshold. At 238, module two may traverse the association network to retrieve a notation specification from a knowledge node linked to an entity representing a target rule format. At 260, neighborhood-aware temporal scoring may maintain relevance for an entity that is not repeated in the latest message but that remains active through semantically related entities. At 262, the system may merge the results and may pass a canonical threshold value and a relevant notation specification forward to FIG. 2C.

FIG. 2C is a flowchart illustrating an exemplary refinement pipeline that may operate on the merged output from 262 of FIG. 2B to produce a context package suitable for dynamic prompt generation and subsequent response generation. At 264, the system may perform confidence filtering. Confidence filtering may include excluding and/or down-weighting candidate items that have confidence values below a threshold, that have staleness indicators, that are associated with unsupported provenance, and/or that are marked as high confabulation risk.

At 266, the system may perform relevance filtering. Relevance filtering may include excluding and/or down-weighting candidate items that do not satisfy a relevance threshold with respect to the current input. Relevance filtering may consider lexical similarity, semantic similarity, entity overlap, intent alignment, goal coherence, and/or hybrid relevance scores.

At 268, the system may perform temporal filtering. Temporal filtering may include ordering and/or selecting candidate items based on recency and/or neighborhood-aware temporal scoring and/or contradiction-aware suppression. In some embodiments, temporal filtering may prioritize newer items when older items conflict on an entity type, thereby reducing the chance that outdated facts are injected into a prompt.

At 270, the system may manage memory. Memory management may include applying a memory budget, converting candidate items into typed key-value facts, constraints, summaries, and/or artifact pointers, and/or selecting a compact set of context elements for inclusion in a prompt. Memory management may include preserving provenance to message identifiers and/or knowledge identifiers.

At 272, the system may rank with probabilistic ranking. Probabilistic ranking may include applying a probabilistic information retrieval model, such as BM25 and/or another term-statistics-based model, and/or combining probabilistic ranking with semantic similarity and/or recentness to compute a hybrid ordering of candidate context items.

At 274, the system may perform knowledge integration. Knowledge integration may include merging conversational memories with external knowledge nodes retrieved from association traversal, normalizing entities between sources, resolving conflicts among sources, and/or producing an integrated context representation that includes both conversational constraints and knowledge-derived guidance.

At 276, the system may reconstruct context. Context reconstruction may include determining whether the available context is sufficient for answering the input and, when insufficient, combining multiple fragments and/or integrated knowledge items to form a more complete contextual representation.

At 278, the system may ensure slot-filling. Ensuring slot-filling may include assessing retrieved and/or reconstructed context against a domain-specific frame template that defines required information slots for the input type, for example slots for a rule-generation task may include threshold value, conditions, exceptions, and output notation, and slots for a troubleshooting task may include symptom, affected component, error signature, attempted actions, and resolution state.

At 280, the system may detect gaps. Gaps may be detected when one or more required slots remain unfilled and/or when a completeness score is below a threshold.

At 282, if gaps are detected, the system may perform targeted knowledge retrieval. Targeted retrieval may include generating gap-specific queries based on missing slot types and retrieving knowledge entries from an external repository that are likely to fill the missing slots.

At 284, the system may infer with neural synthesis and/or logic. Neural synthesis may include generating a unified representation from conversational fragments and retrieved knowledge, and/or logic-based inference may include applying rule-based deductions to fill supported gaps.

At 286, the system may add provenance metadata. Provenance metadata may identify whether each context element and/or derived slot value originated from conversational memory, external knowledge, and/or inference, and may include message identifiers, knowledge identifiers, timestamps, and/or confidence values.

At 288, the system may score with integrated scoring. Integrated scoring may combine confidence, relevance, recency, completeness, provenance, user preferences, and/or historical feedback signals to prioritize context elements and/or to prioritize a final candidate response plan.

At 290, the system may generate dynamic prompt. Dynamic prompt generation may include assembling a prompt template that includes the highest-scoring context elements, constraints, typed facts, and/or knowledge guidance, and may structure the prompt to guide a large language model toward using canonical values and avoiding unsupported assertions.

At 292, the system may process with LLM. Processing with the LLM may include providing the dynamic prompt to a large language model to generate one or more candidate responses, and/or re-ranking candidate responses for consistency with constraints and/or context elements.

At 294, the system may output response to input. The response may be presented to a user via a user interface and/or returned to a calling application via an API, and the system may store the response and/or feedback for subsequent turns.

An illustrative example of FIG. 2C includes a pipeline troubleshooting session. Candidate items from FIG. 2B may include multiple historical error signatures and multiple attempted fixes. At 264, low-confidence items derived from unverified inferences may be filtered. At 266, items unrelated to the current component and environment may be filtered. At 268, older attempts that conflict with a newer confirmed fix may be down-weighted. At 270, the system may convert remaining items into a compact set of typed facts, such as ERROR_CODE, SERVICE_NAME, and ENVIRONMENT, with provenance. At 278, a troubleshooting frame may be evaluated and a missing slot for "attempted_solutions" may be detected at 280, triggering targeted knowledge retrieval at 282. At 290, a dynamic prompt may be generated to constrain the LLM at 292 to propose a remediation consistent with the latest confirmed state, and the final response may be output at 294.

Accordingly, FIGS. 2B and 2C illustrate a contextual recall architecture in which parallel assessment in FIG. 2B, including context relevance assessment at 236, 244, 246, 248, and 250, association network traversal at 238, 254, and 256, metadata lookup at 240, and semantic-temporal scoring at 258 and 260, may be merged at 262 and refined in FIG. 2C through confidence filtering at 264, relevance filtering at 266, temporal filtering at 268, memory management at 270, probabilistic ranking at 272, knowledge integration at 274, context reconstruction at 276, slot-filling enforcement at 278, gap detection at 280, targeted knowledge retrieval at 282, inference at 284, provenance attachment at 286, integrated scoring at 288, dynamic prompt generation at 290, LLM processing at 292, and response output at 294.

In some embodiments, the disclosed system may be characterized as operating with defined performance targets and/or scalability targets. For example, the system may be configured to perform context relevance assessment within less than 200 milliseconds and/or perform end-to-end response generation within less than 500 milliseconds under a defined workload. In some embodiments, the system may be configured to reduce hallucinations by a defined percentage relative to a baseline memory approach (for example, relative to recency-window memory or semantic-only retrieval) and/or to scale to sessions including at least 100,000 conversational turns while maintaining retrieval complexity that is sublinear and/or approximately logarithmic with respect to the number of stored interaction records.

In some embodiments, the disclosed system may implement a concrete software stack and/or deployment architecture. The system may be implemented in a Python-based environment and may utilize PyTorch for neural models and/or NetworkX for graph operations. The system may utilize Elasticsearch and/or another inverted-index search engine for term-based retrieval, may utilize Redis and/or another in-memory cache for working-memory caching and/or feature caching, and may utilize PostgreSQL and/or another relational data store for structured metadata storage. In some embodiments, the system may be deployed as a microservices architecture exposing one or more REST APIs, wherein resource-intensive components (such as embedding generation, graph traversal, cross-encoder scoring, and/or reconstruction synthesis) may be horizontally scaled as separate services.

In some embodiments, the system may be configured with hardware profiles that support parallel execution of retrieval and scoring pathways and/or background maintenance. For example, the system may be executed on a multicore processor (for example, at least 8 CPU cores) and/or with at least 32 GB RAM for in-memory association graph operations and/or caching. In some embodiments, GPU acceleration (for example, CUDA-enabled devices) may be used for embedding computation and/or neural synthesis. In some embodiments, persistent storage may include solid-state storage for the indexed conversational history, embedding stores, and/or external knowledge repositories.

In some embodiments, the system may implement specified training and/or model selection details for one or more learned components. Intent classification may be performed by a transformer model trained and/or fine-tuned on a dataset including at least 50,000 annotated intent examples. Goal extraction may be performed by a sequence-to-sequence model (for example, a T5-family model) trained on structured goal representations. Context reconstruction may be performed by a pointer-generator network that may be configured to copy spans from retrieved conversational fragments and/or knowledge entries while generating connective language. In some embodiments, the context reconstruction may further apply first-order logic inference rules that may be encoded as conditional rules such as IF (error_code = X) AND (component = Y) THEN (likely_cause = Z), thereby enabling deductive gap filling when direct retrieval is incomplete. In some embodiments, confidence tagging may be performed by a learned classifier such as a gradient-boosted decision tree model trained on expert-labeled memory reliability examples.

In some embodiments, the association network may be constructed with additional node and/or edge attribute details beyond those expressly recited in the Patent Specification. For example, each entity node may store attributes comprising an entity identifier, an entity type, a first-mention timestamp, a last-mention timestamp, a mention frequency, and/or a conversational salience score. In some embodiments, application knowledge elements may be pre-populated as knowledge nodes that store attributes comprising a knowledge identifier, a knowledge type, a content embedding, and/or a usage frequency. In some embodiments, random walk with restart traversal may be parameterized by one or more traversal parameters including a restart probability, a maximum hop depth (for example, 2 or 3 hops), a traversal budget, and/or a number of walks per query entity, and node visit frequencies across multiple random walks may be normalized to a retrieval score distribution.

In some embodiments, the system may implement additional user-state-driven retrieval strategy switching criteria. For example, the system may detect one or more user state signals comprising response latency, correction frequency, clarification request frequency, escalation language, deadline indicators, and/or repeated dissatisfaction signals, and may use such user state signals to select among exploratory mode, focused mode, diagnostic mode, and/or review mode. In some embodiments, a diagnostic mode may increase weight on intent alignment and/or causal association traversal, an execution mode may increase weight on goal coherence and/or constraint satisfaction, and an exploratory mode may increase semantic breadth by relaxing recency constraints and/or expanding semantic neighborhoods.

In some embodiments, the memory watchdog and background maintenance may include additional operational scheduling and/or resource management behaviors. For example, the watchdog may execute after a threshold number of conversational turns (for example, every 100 turns) and/or on an hourly schedule and/or during overnight batch windows. In some embodiments, the watchdog may prioritize "hot" memory regions (recently accessed items) before "cold" memory regions (infrequently accessed items) and may apply resource throttling that limits CPU utilization and/or I/O utilization to reduce interference with real-time response generation. In some embodiments, background maintenance may be configured to operate under an overhead budget (for example, less than 5% CPU usage under nominal load).

In some embodiments, the confidence tagging output may be stored in a structured tag format. For example, a stored memory item may be associated with a confidence tag record comprising a confidence_level value in the range [0,1] and/or a set of reliability_factors and/or a set of risk_flags. The reliability_factors may include indicators such as source reliability classification, cross-source consistency results, and/or staleness classification. The risk_flags may include a confabulation-risk flag that may be produced by detecting one or more hallucination signatures, including unsupported claims, logical inconsistencies, and/or entity-relation incompatibilities. In some embodiments, the confidence tags may be used as inputs to confidence filtering in the retrieval pipeline and/or as weights in ranking.

In some embodiments, the system may implement additional domain-specific frame templates and/or exemplary frame slot definitions for context reconstruction beyond those expressly described in the Patent Specification. For example, for deployment troubleshooting, a frame template may include required slots comprising failure_symptom, affected_component, timeline, error_messages, attempted_solutions, and/or resolution_status. For compliance rule generation, a frame template may include required slots comprising threshold_value, condition_predicates, exception_predicates, jurisdiction, effective_date, and/or output_notation. In some embodiments, the gap specification generated by slot-filling completeness assessment may be translated into structured queries that filter retrieval by slot type and/or domain, thereby reducing non-targeted retrieval.

In some embodiments, classification-oriented information may be included to describe the technical field and exemplary classification categories, such as classification categories that may correspond to information retrieval, neural networks, and/or knowledge representation, and such classification information may be stored as metadata and/or used to select retrieval strategies and/or processing paths.

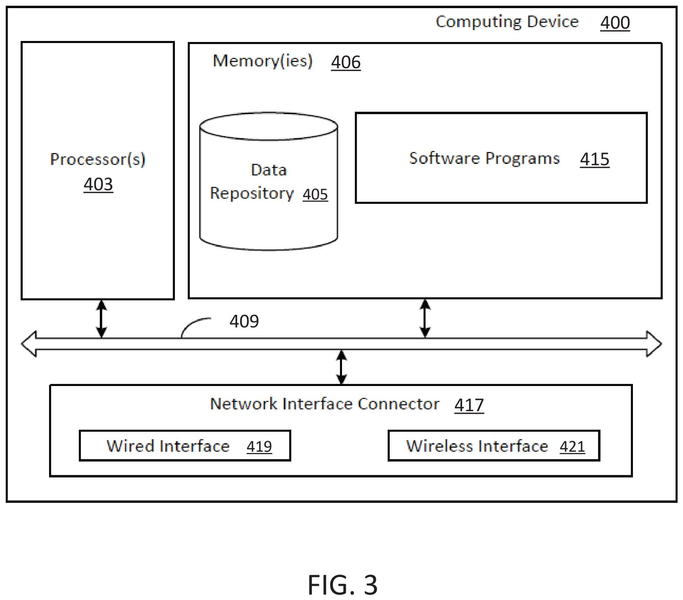

FIG. 3 is a diagram of a computing device for implementing certain embodiments of the present disclosure. FIG. 3 depicts exemplary computing device 400. Computing device 400 may represent hardware that executes the logic that drives the various system components described herein. For example, system components such as a user device, an interface, an event streaming platform, a matching algorithm, and various database/data store engines and servers, and other computer applications and logic may include, and/or execute on, components and configurations like, or similar to, computing device 400.

Computing device 400 includes a processor 403 coupled to a memory 406. Memory 406 may include volatile memory and/or persistent memory. The processor 403 executes computer-executable program code stored in memory 406, such as software programs 415. Software programs 415 may include one or more of the logical steps disclosed herein as a programmatic instruction, which can be executed by processor 403. Memory 406 may include data repository 405, which may be nonvolatile memory for data persistence. The processor 403 and the memory 406 may be coupled by a bus 409. In some examples, the bus 409 may be coupled to one or more network interface connectors 417, such as wired network interface 419, and/or wireless network interface 421. Computing device 400 may have user interface components, such as a screen for displaying graphical user interfaces and receiving input from the user, a mouse, a keyboard and/or other input/output components (not shown).

The various processing steps, logical steps, and/or data flows depicted in the figures and described in greater detail herein may be accomplished using some or all of the system components described herein. In some implementations, the described logical steps may be performed in different sequences and various steps may be omitted. Additional steps may be performed along with some, or all of the steps shown in the depicted logical flow diagrams. Some steps may be performed simultaneously. Accordin gly, the logical flows illustrated in the figures and described in greater detail herein are meant to be exemplary and, as such, should not be viewed as limiting. These logical flows may be implemented in the form of executable instructions stored on a machine-readable storage medium and executed by a processor and/or in the form of statically or dynamically programmed electronic circuitry.

The system of the invention or portions of the system of the invention may be in the form of a "processing machine" a "computing device," an "electronic device," a "mobile device," etc. These may be a computer, a computer server, a host machine, etc. As used herein, the term "processing machine," "computing device, "electronic device," or the like is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular layer, pathway, step, steps, task, or tasks, such as those steps/tasks described above. Such a set of instructions for performing a particular task may be characterized herein as an application, computer application, program, software program, or simply software. In one aspect, the processing machine may be or include a specialized processor.

As noted above, the processing machine executes the instructions that are stored in the memory or memories to process data. This processing of data may be in response to commands by a user or users of the processing machine, in response to previous processing, in response to a request by another processing machine and/or any other input, for example. The processing machine used to implement the invention may utilize a suitable operating system, and instructions may come directly or indirectly from the operating system.

The processing machine used to implement the invention may be a general-purpose computer. However, the processing machine described above may also utilize any of a wide variety of other technologies including a special purpose computer, a computer system including, for example, a microcomputer, minicomputer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA, PLD, PLA or PAL, or any other device or arrangement of devices that is capable of implementing the steps of the processes of the invention.

It is appreciated that in order to practice the method of the invention as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above may, in accordance with a further aspect of the invention, be performed by a single component. Further, the processing performed by one distinct component as described above may be performed by two distinct components. In a similar manner, the memory storage performed by two distinct memory portions as described above may, in accordance with a further aspect of the invention, be performed by a single memory portion. Further, the memory storage performed by one distinct memory portion as described above may be performed by two memory portions.

Further, various technologies may be used to provide communication between the various processors and/or memories, as well as to allow the processors and/or the memories of the invention to communicate with any other system, i.e., so as to obtain further instructions or to access and use remote memory stores, for example. Such technologies used to provide such communication might include a network, the Internet, Intranet, Extranet, LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of the invention. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of the invention may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments of the invention. Illustratively, the programming language used may include assembly language, Ada, APL, Basic, C, C++, COBOL, dBase, Forth, Fortran, Java, Modula-2, Pascal, Prolog, REXX, Visual Basic, and/or JavaScript, for example. Further, it is not necessary that a single type of instruction or single programming language be utilized in conjunction with the operation of the system and method of the invention. Rather, any number of different programming languages may be utilized as is necessary and/or desirable.

Also, the instructions and/or data used in the practice of the invention may utilize any compression or encryption technique or algorithm, as may be desired. An encryption module might be used to encrypt data. Further, files or other data may be decrypted using a suitable decryption module, for example.

As described above, the invention may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in the invention may take on any of a variety of physical forms or transmissions, for example. Illustratively, the medium may be in the form of a compact disk, a DVD, an integrated circuit, a hard disk, a floppy disk, an optical disk, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by a processor.

Further, the memory or memories used in the processing machine that implements the invention may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the system and method of the invention, a variety of "user interfaces" may be utilized to allow a user to interface with the processing machine or machines that are used to implement the invention. As used herein, a user interface includes any hardware, software, or combination of hardware and software used by the processing machine that allows a user to interact with the processing machine. A user interface may be in the form of a dialog screen for example. A user interface may also include any of a mouse, touch screen, keyboard, keypad, voice reader, voice recognizer, dialog screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method of the invention, it is not necessary that a human user actually interact with a user interface used by the processing machine of the invention. Rather, it is also contemplated that the user interface of the invention might interact, i.e., convey and receive information, with another processing machine, rather than a human user. Accordingly, the other processing machine might be characterized as a user. Further, it is contemplated that a user interface utilized in the system and method of the invention may interact partially with another processing machine or processing machines, while also interacting partially with a human user.

It will be readily understood by those persons skilled in the art that the present invention is susceptible to broad utility and application. Many aspects and adaptations of the present invention other than those herein described, as well as many variations, modifications, and equivalent arrangements, will be apparent from or reasonably suggested by the present invention and foregoing description thereof, without departing from the substance or scope of the invention.

Accordingly, while the present invention has been described here in detail in relation to its exemplary aspects, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such aspects, embodiments, adaptations, variations, modifications, or equivalent arrangements.

## Claims

1. A method for enhancing conversational recall in chat-based systems, comprising:
receiving, by an application executed by a server, a user input within a conversational session;
indexing, by the application, the message with metadata fields including a message identifier, a content, a timestamp, a user identification, a session identification, a keyword, and an entity into an indexed conversational history;
expanding, by the application, the user input using a lexical database to include synonyms, keywords, and entities for broader contextual recall to generate potential responses;
filtering, based on recentness prioritization and by the application, the potential responses to prioritize recall of more recent interactions to form filtered potential responses;
ranking, by the application, the filtered potential responses based on context-sensitive scoring based on a recentness, a content relevance, the keywords, and the entities;
storing and indexing, by the application, a plurality of features ranked based on frequency;
searching, by the application, a database to manage contextual memory, the contextual memory comprising keywords and entities linked to ranked features from the indexed conversational history;
generating, by the application, a dynamic prompt template based on user input, session history, and contextual memory;
generating, by a large language model ("LLM") in operative communication with the application, a response to the input user message based on the prompt template; and
presenting, by the application, the generated response to the user based on the filtered potential responses and the dynamic prompt template.

2. The method of claim 1, wherein ranking the potential responses comprises evaluating the potential responses along three parallel assessment pathways including an intent alignment pathway computing similarity between query intent and candidate memory intent, a goal coherence pathway computing overlap between active goals and historical goals, and a semantic relevance pathway computing embedding-based similarity, wherein scores from the three pathways combine using adaptive weights to form the context-sensitive scoring.

3. The method of claim 2, wherein the goal coherence pathway computes a Jaccard similarity coefficient defined as J(A,B) = lA∩B| / |A∪B|, wherein A represents goal components from current active goals and B represents goal components from historical goals associated with the candidate memory intent.

4. The method of claim 1, further comprising constructing a dynamic association network representing relationships among entities extracted from the conversational session, wherein the dynamic association network comprises a directed weighted graph including a co-occurrence edge, a semantic relationship edge, a temporal sequence edge, and a knowledge-bridging edge connecting one or more of the entities to one or more application knowledge nodes.

5. The method of claim 4, wherein searching the database to manage contextual memory comprising traversing the dynamic association network to determine the keywords and the entities.

6. The method of claim 4, wherein ranking the potential responses comprises performing parallel processing of at least two concurrent pathways, wherein a first pathway computes context relevance scores and a second pathway performs traversal of the dynamic association network, and wherein results from the at least two concurrent pathways are merged prior to filtering.

7. The method of claim 1, wherein the dynamic prompt template generation includes visual aids or graphical representations.

8. The method of claim 1, wherein the proposed responses are generated by re-ranking, by the LLM in operative communication with or executed by the server, proposed responses by determining if the keyword, entity, and user input message associated with each calculated score is relevant to each response.

9. The method of claim 1, wherein indexing the message comprises storing, for each of a plurality of extracted entities, a normalized entity identifier, an entity type, and a provenance reference to the message identifier, and wherein the searching of the database retrieves contextual memory using the normalized entity identifier.

10. The method of claim 1, wherein filtering based on recentness prioritization comprises applying a contradiction-aware suppression operation that, in response to detecting that a first stored interaction includes a first value for a given entity type and a second stored interaction that is more recent includes a second value for the given entity type that differs from the first value, excludes or down-weights the first stored interaction for purposes of the ranking.

11. The method of claim 1, wherein ranking the potential responses comprises computing a hybrid score that combines (i) a probabilistic lexical relevance score computed from the indexed conversational history, (ii) a semantic similarity score computed from vector representations of at least one of the user input message and the indexed conversational history, and (iii) a recentness score, and selecting the ranked features based on the hybrid score.

12. The method of claim 1, wherein storing and indexing the plurality of features ranked based on frequency comprises maintaining a session feature store that includes at least one persistent preference feature derived from at least one prior user input message, and wherein generating the dynamic prompt template comprises inserting the persistent preference feature as a constraint applicable to the response.

13. The method of claim 1, wherein generating the dynamic prompt template comprises generating a structured context package that includes a plurality of typed key-value facts extracted from the ranked features, and excluding at least a portion of raw conversational text from the dynamic prompt template when the typed key-value facts meet or exceed a memory budget.

14. The method of claim 1, further comprising validating the response generated by the large language model against at least one constraint represented in the dynamic prompt template, and in response to determining that the response violates the at least one constraint, causing regeneration of the response using an augmented prompt template that includes an error signal identifying the violated constraint.

15. The method of claim 1, further comprising executing background memory maintenance computing relevance scores for stored memories based on access frequency, recency, goal contribution, information uniqueness, and user confirmation signals, and applying graduated condensation to memories falling below an adaptive relevance threshold.

16. A chat-based conversational recall system, comprising:
a server comprising one or more processors; and
one or more non-transitory memories storing instructions that, when executed by the one or more processors, cause an application executed by the server to:
receive a user input within a conversational session;
index the user input message with metadata fields comprising a message identifier, content, a timestamp, a user identification, a session identification, at least one keyword, and at least one entity into an indexed conversational history;
expand a user query derived from the user input using a lexical database to include synonyms, keywords, and entities for broader contextual recall to generate potential responses;
filter, based on recentness prioritization, the potential responses to prioritize recall of more recent interactions to form filtered potential responses; rank the filtered potential responses based on context-sensitive scoring based on recentness, content relevance, keywords, and entities;
store and index a plurality of features ranked based on frequency;
search a database to manage contextual memory by leveraging contextual memory comprising keywords and entities linked to ranked features from indexed conversational history;
generate a dynamic prompt template based on the user input message, session history, and the contextual memory;
generate, through a large language model in operative communication with the application, a response to the user input message based on the dynamic prompt template; and
present the response to a user based on the potential responses and the dynamic prompt template.

17. The system of claim 16, wherein ranking the filtered potential responses comprises evaluating the filtered potential responses along three parallel assessment pathways comprising:
an intent alignment pathway computing similarity between a query intent associated with the user input and a candidate memory intent associated with a candidate memory;
a goal coherence pathway computing overlap between active goals of the conversational session and historical goals associated with the candidate memory; and
a semantic relevance pathway computing embedding-based similarity between the user input message and the candidate memory, wherein scores from the three parallel assessment pathways are combined using adaptive weights to form at least a portion of the context-sensitive scoring.

18. The system of claim 17, wherein the goal coherence pathway computes a Jaccard similarity coefficient defined as J(A,B) = |A∩B| / |A∪B|, wherein A represents goal components from current active goals and B represents goal components from historical goals associated with the candidate memory.

19. The system of claim 16, wherein expanding the user input comprises incorporating user-specific preferences and/or historical interaction data associated with the user identification and/or the session identification to refine selection of the synonyms and related terms.

20. A non-transitory computer-readable medium storing instructions that, when executed by one or more processors, cause the one or more processors to perform operations for enhancing conversational recall in chat-based systems, the operations comprising:
receiving, by an application executed by a server, a user input message within a conversational session;
indexing, by the application, the user input message with metadata fields comprising a message identifier, content, a timestamp, a user identification, a session identification, at least one keyword, and at least one entity;
expanding, by the application, a user query derived from the user input message using a lexical database to include synonyms, keywords, and entities for broader contextual recall to generate potential responses;
filtering, based on recentness prioritization and by the application, the potential responses to prioritize recall of more recent interactions to form filtered potential responses;
ranking, by the application, the filtered potential responses based on context-sensitive scoring based on recentness, content relevance, keywords, and entities;
storing and indexing, by the application, a plurality of features ranked based on frequency;
searching, by the application, a database to manage contextual memory by leveraging contextual memory comprising keywords and entities linked to ranked features from indexed conversational history;
generating, by the application, a dynamic prompt template based on the user input message, session history, and the contextual memory;
generating, by a large language model in operative communication with the application, a response to the user input message based on the dynamic prompt template; and
presenting, by the application, the response to a user based on the potential responses and the dynamic prompt template.
